# EUROPEAN PATENT APPLICATION

(11) **EP 4 780 060 A1**
(43) Date of publication of application: **22.07.2026**
(21) Application number: 24870701.0
(22) Date of filing: 24.09.2024
(51) Int. Cl.: H04W 24/10

(54) **CACHE STATUS REPORTING METHOD AND APPARATUS**

(30) Priority: 28.09.2023 CN 202311295513
(71) Applicant: HUAWEI TECHNOLOGIES CO., LTD., Shenzhen 518129 (CN)
(72) Inventor: LU, Yujiao, Shenzhen, Guangdong 518129 (CN); FAN, Qiang, Shenzhen, Guangdong 518129 (CN)
(74) Representative: Pfenning, Meinig & Partner mbB
(86) International application number: PCT/CN2024/120683
(87) International publication number: WO 2025/067157

(57) **Abstract**

Embodiments of this application provide a buffer status reporting method and an apparatus. The method includes: triggering a DSR when first data on a first logical channel LCH meets a first condition, where the first condition includes: remaining time corresponding to the first data changes from being greater than or equal to a first threshold to being less than the first threshold; sending the DSR to a network device; and after sending the DSR, skipping triggering a DSR when remaining time of second data included in the first data on the first LCH is less than the first threshold. According to the method, when the remaining time corresponding to the first data on the first LCH changes from being greater than or equal to the first threshold to being less than the first threshold, a DSR is triggered once. Then, the remaining time corresponding to the first data continues to decrease, and is always less than the first threshold. However, after the DSR is triggered once for the first data, a DSR is no longer triggered, so that frequent triggering of DSRs can be avoided, thereby reducing consumption of uplink resources.

## Description

### CROSS-REFERENCE TO RELATED APPLICATIONS

This application claims priority to Chinese Patent Application No. 202311295513.5, filed with the China National Intellectual Property Administration on September 28, 2023 and entitled "BUFFER STATUS REPORTING METHOD AND APPARATUS", which is incorporated herein by reference in its entirety.

### TECHNICAL FIELD

This application relates to the field of communication technologies, and in particular, to a buffer status reporting method and an apparatus.

### BACKGROUND

Extended reality (extended reality, XR) refers to various real-and-virtual combined environments and human-machine interactions generated by using computer technologies and wearable devices, and specifically includes the following representative forms: augmented reality (augmented reality, AR), virtual reality (virtual reality, VR), and mixed reality (mixed reality, MR). Usually, an XR service periodically generates data frames at a specific frame rate. A size of the data frame is not fixed. Each data frame may have a different encoding delay during encoding, and also has a different forwarding delay during forwarding in a core network. As a result, jitter may occur in a moment at which XR data in each periodicity arrives at an air interface side. To be specific, an arrival moment of the XR data may be earlier or later than an expected periodicity moment. However, the XR service usually has a high delay requirement. If transmission of the XR data does not succeed within a delay budget, the XR data times out and is invalid. A network should complete data scheduling and transmission within the delay budget as much as possible, to avoid affecting service experience due to data timeout.

For an uplink XR service, a concept and a report mechanism of remaining time (remaining time) are introduced to enable a network device (for example, a base station) to learn of a delay budget consumption status of data in a buffer of user equipment (user equipment, UE), so as to complete data transmission before a packet delay budget (packet delay budget, PDB)/PDU set delay budget (PDU set delay budget, PSDB) is exhausted. That is, the UE may report remaining time of the data in the buffer to the base station. Specifically, the UE may send a medium access control control element (medium access control control element, MAC CE) to the base station, to explicitly or implicitly reflect remaining time of a part or all of the data in the buffer of the UE. The MAC CE may be referred to as a delay status report (delay status report, DSR). A current DSR triggering manner is as follows: When remaining time of a protocol data unit (protocol data unit, PDU) or a PDU set (PDU set) in a logical channel group (logical channel group, LCG) is less than a threshold, a DSR is triggered, where the threshold is configured by the network device for each LCG for the UE. After the UE triggers the DSR, once an uplink transmission resource is available, the UE may send a MAC CE of the DSR on the uplink transmission resource. However, a current DSR triggering condition is inappropriate because after the remaining time of the data is less than the threshold, in terms of status, the remaining time of this part of data is always less than the threshold. In other words, the DSR triggering condition is always met. As a result, this part of data is used for triggering DSRs continuously and repeatedly, which may cause a waste of uplink transmission resources.

### SUMMARY

Embodiments of this application provide a buffer status reporting method and an apparatus, to reduce consumption of uplink transmission resources.

According to a first aspect, this application provides a buffer status reporting method. The method may be implemented by a terminal device or a chip or a component in the terminal device. In the following, an example in which the method is performed by the terminal device is used. The method may be implemented by using the following steps: The terminal device triggers a DSR when first data on a first logical channel LCH meets a first condition, where the first condition includes: remaining time corresponding to the first data changes from being greater than or equal to a first threshold to being less than the first threshold. The terminal device sends the DSR to a network device. After the DSR is sent, when remaining time of second data included in the first data on the first LCH is less than the first threshold, the terminal device does not trigger a DSR.

According to this solution, when the remaining time corresponding to the first data on the first LCH changes from being greater than or equal to the first threshold to being less than the first threshold, a DSR is triggered once. Then, the remaining time corresponding to the first data continues to decrease. Although the remaining time corresponding to the first data is always less than the first threshold, the first data is no longer used for triggering a DSR. In other words, the DSR is triggered only once for the first data, so that frequent triggering of DSRs can be avoided, thereby reducing consumption of uplink resources.

In a possible implementation, the first condition further includes: a data volume corresponding to the first data is greater than or equal to a second threshold. The first data may include one or more pieces of data. When the first data includes a plurality of pieces of data, that the remaining time corresponding to the first data changes from being greater than or equal to the first threshold to being less than the first threshold includes: remaining time corresponding to a first part of data included in the first data all changes from being greater than or equal to the first threshold to being less than the first threshold, and remaining time corresponding to a second part of data included in the first data is all less than the first threshold, where the first part of data and the second part of data form the plurality of pieces of data. It may be understood that the second part of data may not exist, that is, the remaining time of the plurality of pieces of data included in the first data all changes from being greater than or equal to the first threshold to being less than the first threshold. In this implementation, the DSR is triggered only when the remaining time corresponding to the first data changes from being greater than or equal to the first threshold to being less than the first threshold, and the data volume corresponding to the first data is greater than or equal to the second threshold. The first condition for triggering the DSR not only considers the remaining time of the data on the first LCH, but also considers a data volume of data that meets a remaining time threshold condition. In this way, DSR triggering frequency can be effectively reduced, and consumption of uplink resources caused by triggering the DSR can be greatly reduced.

In a possible implementation, the first data does not include data that has been used for triggering a DSR. In other words, the data that has been used for triggering a DSR is no longer counted in a volume of data used to determine whether a DSR is triggered, to ensure that the data is used for triggering the DSR only once.

In a possible implementation, the second threshold is preset or indicated by the network device to the terminal device.

In a possible implementation, in addition to that the remaining time corresponding to the first data changes from being greater than or equal to the first threshold to being less than the first threshold, the first condition further includes any one of the following condition 1.1, condition 1.2, condition 1.3, and condition 1.4.

Condition 1.1: No data exists on a second LCH, and the second LCH is different from the first LCH.

Condition 1.2: No data whose remaining time is less than the first threshold exists on the second LCH.

Condition 1.3: A priority of the first LCH is higher than a priority of a third LCH, data exists on the third LCH, and the third LCH is different from the first LCH.

Condition 1.4: The priority of the first LCH is higher than a priority of a fourth LCH, data whose remaining time is less than the first threshold exists on the fourth LCH, and the fourth LCH is different from the first LCH.

In this implementation, the first condition for triggering the DSR not only considers the remaining time of the data on the first LCH, but also considers whether data, emergency data, data with a higher priority, emergency data with a higher priority, or the like exists on another LCH, so that it can be ensured that the to-be-transmitted data, emergency data, data with a higher priority, or emergency data with a higher priority can be preferentially sent.

In a possible implementation, in addition to that the remaining time corresponding to the first data changes from being greater than or equal to the first threshold to being less than the first threshold, the first condition further includes any one of the following condition 2.1, condition 2.2, condition 2.3, condition 2.4, and condition 2.5.

Condition 2.1: The first data corresponds to high importance.

Condition 2.2: The first data corresponds to the high importance, no data exists on a second LCH, and the second LCH is different from the first LCH.

Condition 2.3: The first data corresponds to the high importance, and no data whose remaining time is less than the first threshold exists on the second LCH.

Condition 2.4: The first data corresponds to the high importance, a priority of the first LCH is higher than a priority of a third LCH, data exists on the third LCH, and the third LCH is different from the first LCH.

Condition 2.5: The first data corresponds to the high importance, the priority of the first LCH is higher than a priority of a fourth LCH, data whose remaining time is less than the first threshold exists on the fourth LCH, and the fourth LCH is different from the first LCH.

In this implementation, the first condition for triggering the DSR not only considers the remaining time of the data on the first LCH, but also considers importance of the data and whether data, emergency data, data with a higher priority, emergency data with a higher priority, or the like exists on another LCH, so that it can be ensured that the to-be-transmitted data of high importance, emergency data of high importance, data of high importance and with a higher priority, or emergency data of high importance and with a higher priority can be preferentially sent.

In a possible implementation, in addition to that the remaining time corresponding to the first data changes from being greater than or equal to the first threshold to being less than the first threshold, and the data volume corresponding to the first data is greater than or equal to the second threshold, the first condition further includes any one of the following condition 2.1, condition 2.2, condition 2.3, condition 2.4, and condition 2.5.

Condition 2.1: The first data corresponds to high importance.

Condition 2.2: The first data corresponds to the high importance, no data exists on a second LCH, and the second LCH is different from the first LCH.

Condition 2.3: The first data corresponds to the high importance, and no data whose remaining time is less than the first threshold exists on the second LCH.

Condition 2.4: The first data corresponds to the high importance, a priority of the first LCH is higher than a priority of a third LCH, data exists on the third LCH, and the third LCH is different from the first LCH.

Condition 2.5: The first data corresponds to the high importance, the priority of the first LCH is higher than a priority of a fourth LCH, data whose remaining time is less than the first threshold exists on the fourth LCH, and the fourth LCH is different from the first LCH.

In this implementation, the first condition for triggering the DSR not only considers a data volume of data that meets a remaining time condition on the first LCH, but also considers importance of the data and whether data, emergency data, data with a higher priority, emergency data with a higher priority, or the like exists on another LCH, so that not only DSR triggering frequency can be reduced, it can also be ensured that when to-be-transmitted data of high importance, emergency data of high importance, data of high importance and with a higher priority, or emergency data of high importance and with a higher priority exists on the another LCH, the data on the another LCH can be preferentially sent.

In a possible implementation, in addition to that the remaining time corresponding to the first data changes from being greater than or equal to the first threshold to being less than the first threshold, the first condition includes any one of the following condition 3.1, condition 3.2, condition 3.3, and condition 3.4.

Condition 3.1: The first data corresponds to high importance, no data of high importance exists on a second LCH, and the second LCH is different from the first LCH.

Condition 3.2: The first data corresponds to the high importance, and no data that is of high importance and whose remaining time is less than the first threshold exists on the second LCH.

Condition 3.3: The first data corresponds to the high importance, a priority of the first LCH is higher than a priority of a fifth LCH, data of high importance exists on the fifth LCH, and the fifth LCH is different from the first LCH.

Condition 3.4: The first data corresponds to the high importance, the priority of the first LCH is higher than a priority of a sixth LCH, data that is of high importance and whose remaining time is less than the first threshold exists on the sixth LCH, and the sixth LCH is different from the first LCH.

In this implementation, the first condition for triggering the DSR not only considers the remaining time and importance of the data on the first LCH, but also considers whether data of high importance, emergency data of high importance, data of high importance and with a higher priority, emergency data of high importance and with a higher priority, or the like exists on another LCH, so that it can be ensured that when no to-be-transmitted data of high importance, emergency data of high importance, data of high importance and with a higher priority, emergency data of high importance and with a higher priority, or the like exists on the another LCH, the first data is used for triggering the DSR only once; or when to-be-transmitted data of high importance, emergency data of high importance, data of high importance and with a higher priority, or emergency data of high importance and with a higher priority exists on the another LCH, the data on the another LCH can be preferentially sent.

In a possible implementation, in addition to that the remaining time corresponding to the first data changes from being greater than or equal to the first threshold to being less than the first threshold, and the data volume corresponding to the first data is greater than or equal to the second threshold, the first condition includes any one of the following condition 3.1, condition 3.2, condition 3.3, and condition 3.4.

Condition 3.1: The first data corresponds to high importance, no data of high importance exists on a second LCH, and the second LCH is different from the first LCH.

Condition 3.2: The first data corresponds to the high importance, and no data that is of high importance and whose remaining time is less than the first threshold exists on the second LCH.

Condition 3.3: The first data corresponds to the high importance, a priority of the first LCH is higher than a priority of a fifth LCH, data of high importance exists on the fifth LCH, and the fifth LCH is different from the first LCH.

Condition 3.4: The first data corresponds to the high importance, the priority of the first LCH is higher than a priority of a sixth LCH, data that is of high importance and whose remaining time is less than the first threshold exists on the sixth LCH, and the sixth LCH is different from the first LCH.

In this implementation, the first condition for triggering the DSR not only considers a data volume and importance of data that meets a remaining time condition on the first LCH, but also considers whether data of high importance, emergency data of high importance, data of high importance and with a higher priority, emergency data of high importance and with a higher priority, or the like exists on another LCH, so that when no to-be-transmitted data of high importance, emergency data of high importance, data of high importance and with a higher priority, emergency data of high importance and with a higher priority, or the like exists on the another LCH, DSR triggering frequency can be reduced; or when to-be-transmitted data of high importance, emergency data of high importance, data of high importance and with a higher priority, emergency data of high importance and with a higher priority, or the like exists on the another LCH, the data on the another LCH can be preferentially sent.

In a possible implementation, in addition to that the remaining time corresponding to the first data changes from being greater than or equal to the first threshold to being less than the first threshold, the first condition further includes: a flag bit corresponding to the first data is a first value, where the first value indicates that the first data has not been used for triggering a DSR. In this implementation, the terminal device needs to maintain only a flag bit of each piece of data, and may determine, based on a value of the flag bit of the data, which data has been used for triggering a DSR and which data has not been used for triggering a DSR. In comparison with monitoring remaining time of each piece of data, this may reduce a requirement on storage or processing overheads of the terminal device.

In a possible implementation, after the terminal device triggers the delay status report DSR, the terminal device may further update the flag bit corresponding to the first data to a second value, where the second value indicates that the first data has been used for triggering a DSR.

In a possible implementation, in addition to that the remaining time corresponding to the first data changes from being greater than or equal to the first threshold to being less than the first threshold, the first condition further includes: a sequence number corresponding to the first data is greater than a DSR sequence number, where the DSR sequence number is a largest sequence number corresponding to data that has been used for triggering a DSR. In this implementation, the terminal device needs to maintain only one variable, that is, the DSR sequence number, and may learn, based on the DSR sequence number, that data before the DSR sequence number is used for triggering a DSR, and data after the DSR sequence number is not used for triggering a DSR. In comparison with monitoring remaining time of each piece of data, this may reduce a requirement on storage or processing overheads of the terminal device.

In a possible implementation, after the terminal device triggers the delay status report DSR, the terminal device may further update the DSR sequence number to the sequence number corresponding to the first data.

According to a second aspect, this application provides a buffer status reporting method. The method may be implemented by a terminal device or a chip or a component in the terminal device. In the following, an example in which the method is performed by the terminal device is used. The method may be implemented by using the following steps: The terminal device periodically triggers delay status reports DSRs for a first logical channel LCH. The terminal device periodically sends the DSRs to a network device.

According to this solution, the terminal device periodically triggers the DSRs for the first LCH, so that unnecessary DSR triggering and sending can be avoided, thereby saving network resources.

In a possible implementation, the terminal device may further receive first configuration information sent by the network device, where the first configuration information indicates a DSR triggering periodicity corresponding to the first LCH. In this way, the terminal device may periodically trigger the DSRs based on the periodicity indicated in the first configuration information.

In a possible implementation, the first configuration information further indicates an occasion on which the terminal device triggers a DSR for a first time. The terminal device may trigger a first DSR based on the occasion on which the DSR is triggered for the first time indicated in the first configuration information, and then periodically trigger the DSRs based on the periodicity indicated in the first configuration information.

In a possible implementation, the terminal device may further receive downlink control information DCI, where the DCI indicates an occasion on which the terminal device triggers a DSR for a first time. The terminal device may trigger a first DSR based on the occasion on which the DSR is triggered for the first time indicated in the DCI, and then periodically trigger the DSRs based on the periodicity indicated in the first configuration information.

According to a third aspect, this application further provides a communication apparatus. The communication apparatus can implement any method provided in either of the first aspect and the second aspect. The communication apparatus may be implemented by hardware, or may be implemented by executing corresponding software by hardware. The hardware or the software includes one or more units or modules corresponding to the foregoing functions.

In a possible implementation, the communication apparatus includes a processor. The processor is configured to support the communication apparatus in performing a corresponding function of the terminal device in the foregoing method. The communication apparatus may further include a memory. The memory may be coupled to the processor, and the memory stores program instructions and data that are necessary for the communication apparatus. Optionally, the communication apparatus further includes an interface circuit, and the interface circuit is configured to support communication between the communication apparatus and a network device.

In a possible implementation, the communication apparatus includes corresponding functional modules configured to implement the steps in the foregoing method. The function may be implemented by hardware, or may be implemented by executing corresponding software by hardware. The hardware or the software includes one or more modules corresponding to the foregoing function.

In a possible implementation, a structure of the communication apparatus includes a processing unit and a communication unit. These units may perform corresponding functions in the foregoing method examples. For details, refer to descriptions in the method provided in either of the first aspect and the second aspect. Details are not described herein.

According to a fourth aspect, a communication apparatus is provided, including a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement the method in any possible implementation of either of the first aspect and the second aspect by using a logic circuit or by executing code instructions.

According to a fifth aspect, a computer-readable storage medium is provided. The computer-readable storage medium stores a computer program or instructions. When the computer program or the instructions are executed by a processor, the method in any possible implementation of either of the first aspect and the second aspect is implemented.

According to a sixth aspect, a computer program product storing instructions is provided. When the instructions are run by a processor, the method in any possible implementation of either of the first aspect and the second aspect is implemented.

According to a seventh aspect, a circuit is provided. The circuit is configured to perform the method in any possible implementation of either of the first aspect and the second aspect, and the circuit may include a chip circuit. Optionally, the circuit may be further coupled to a memory.

According to an eighth aspect, a chip is provided. The chip includes a processor, configured to implement the method in any possible implementation of either of the first aspect and the second aspect. Optionally, the chip may further include a memory. The chip may include a chip, or may include a chip and another discrete device.

For technical effects brought by the second aspect to the eighth aspect, refer to descriptions of the first aspect or the second aspect. Details are not described herein again.

### BRIEF DESCRIPTION OF DRAWINGS

FIG. 1 is a diagram of an architecture of a system according to an embodiment of this application;
FIG. 2 is a diagram of triggering a DSR in the conventional technology;
FIG. 3 is a schematic flowchart of a buffer status reporting method according to an embodiment of this application;
FIG. 4 is a diagram of triggering a DSR based on remaining time according to an embodiment of this application;
FIG. 5 is a diagram of triggering a DSR based on a data volume according to an embodiment of this application;
FIG. 6 is a diagram of triggering a DSR based on a flag bit according to an embodiment of this application;
FIG. 7 is a diagram of triggering a DSR based on a sequence number according to an embodiment of this application;
FIG. 8 is a schematic flowchart of a buffer status reporting method according to an embodiment of this application;
FIG. 9 is a diagram of periodically triggering DSRs according to an embodiment of this application;
FIG. 10 is a diagram of a structure of a communication apparatus according to an embodiment of this application;
FIG. 11 is a diagram of a structure of a communication apparatus according to an embodiment of this application; and
FIG. 12 is a diagram of a structure of a communication apparatus according to an embodiment of this application.

### DESCRIPTION OF EMBODIMENTS

Embodiments of this application provide a buffer status reporting method and an apparatus. The method and the apparatus are based on a same inventive concept. Because the method and the apparatus have a similar problem-resolving principle, for embodiments of the apparatus and the method, refer to each other, and no repeated description is provided.

In descriptions of embodiments of this application, "and/or" describes an association relationship between associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. In addition, it should be understood that in description of this application, terms such as "first" and "second" are merely used for distinguishing and description, but should not be understood as indicating or implying relative importance, or should not be understood as indicating or implying a sequence.

It should be understood that in this application, "at least one (item)" means one or more. "A plurality of" means two or more than two. "At least two (items)" means two, three, or more than three. "At least one of the following items (pieces)" or a similar expression thereof means any combination of these items, including any combination of singular items (pieces) or plural items (pieces). For example, at least one (piece) of a, b, or c may indicate a, b, c, a and b, a and c, b and c, or a, b, and c, where a, b, and c may be singular or plural. Both "when ..." and "if" mean that corresponding processing is performed in an objective case, are not intended to limit time, do not require a determining action during implementation, and do not mean that there is another limitation.

In addition, in embodiments of this application, terms such as "example" or "for example" indicate giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

In addition, terms "include", "have", and any variants thereof are intended to cover a non-exclusive inclusion. For example, a process, a method, a system, a product, or a device that includes a series of steps or units is not limited to listed steps or units, but optionally further includes an unlisted step or unit, or optionally further includes another inherent step or unit of the process, the method, the product, or the device.

The buffer status reporting method provided in embodiments of this application may be applied to various communication systems, for example, may be applied to a 4th generation (4th generation, 4G) communication system, for example, a long term evolution (long term evolution, LTE) communication system, may be applied to a 5th generation (5th generation, 5G) communication system, for example, a 5G new radio (new radio, NR) communication system, or may be applied to a 6th generation (6th generation, 6G) communication system, a new communication system emerging in future communication development, or the like. The method provided in embodiments of this application may be further applied to a Bluetooth system, a wireless fidelity (wireless fidelity, Wi-Fi) system, a long range radio (long range radio, LoRa) system, or an internet of vehicles system. The method provided in embodiments of this application may be further applied to a satellite communication system. The satellite communication system may be integrated with the foregoing communication system. It may be understood that the buffer status reporting method provided in embodiments of this application may be applied to another communication system.

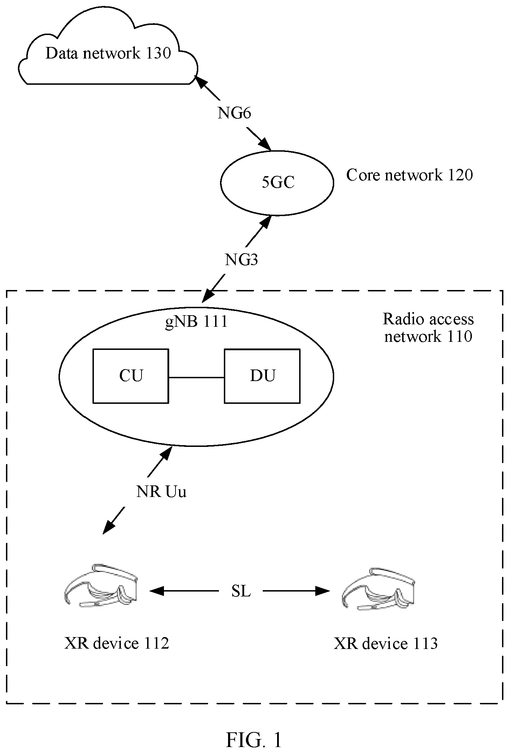

For ease of understanding of embodiments of this application, an application scenario to which this application is applicable is described by using an architecture of a communication system shown in FIG. 1 as an example. As shown in FIG. 1, the communication system 100 includes a radio access network 110 and a core network 120. Optionally, the communication system 100 further includes a data network (data network, DN) 130. The radio access network 110 includes at least one network device, for example, a base station 5G generation NodeB (generation NodeB, gNB) 111 shown in FIG. 1. The radio access network 110 may further include at least one terminal device, for example, an XR device 112 and an XR device 113 shown in FIG. 1. A transmission path of downlink data is as follows: Data generated by an application server is forwarded by using a data network, and is sent to the core network 120 through an NG6 interface. The core network 120 then transfers the data to the gNB 111 through an NG3 interface, and the gNB 111 sends the data to the XR device 112 through a Uu air interface. A transmission path of uplink data is opposite to the transmission path of the downlink data.

The terminal device is connected to a radio access network device in a wireless manner, and the radio access network device is connected to the core network in a wireless or wired manner. A core network device and the radio access network device may be independent and different physical devices, or functions of the core network device and logical functions of the radio access network device may be integrated into a same physical device, or a part of functions of the core network device and a part of functions of the radio access network device may be integrated into one physical device. Terminal devices may be connected to each other in a wired or wireless manner, and radio access network devices may be connected to each other in a wired or wireless manner. It may be understood that FIG. 1 shows only a possible architecture of the communication system to which embodiments of this application may be applied. In another possible scenario, the architecture of the communication system may alternatively include another device.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

The following describes a part of terms in embodiments of this application, to facilitate understanding of a person skilled in the art.
(1) A network device in embodiments of this application may be a device in a wireless network, and the network device may also be referred to as a network apparatus. For example, the network device may be a radio access network (radio access network, RAN) node that connects the terminal device to the wireless network, and may also be referred to as an access network device. The network device includes but is not limited to: a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, an access network device in an open radio access network (open radio access network, O-RAN), a next generation base station in a 6th generation (6th generation, 6G) mobile communication system, a base station in a future mobile communication system, an access node in a wireless fidelity (wireless fidelity, Wi-Fi) system, or the like; or may be a module or unit that completes a part of functions of the base station, for example, may be a central unit (central unit, CU), a distributed unit (distributed unit, DU), a central unit control plane (CU control plane, CU-CP) module, or a central unit user plane (CU user plane, CU-UP) module. The access network device may be a macro base station, may be a micro base station or an indoor base station, or may be a relay node, a donor node, or the like. A specific technology and a specific device form that are used by the network device are not limited in this application.

In some deployments, the network device may include a central unit (central unit, CU) and a distributed unit (distributed unit, DU). A RAN device including a CU node and a DU node separates protocol layers of a gNB in an NR system. Functions of a part of protocol layers are controlled by the CU in a centralized manner. Functions of a part or all of remaining protocol layers are distributed in the DU, and the CU controls the DU in a centralized manner. Further, the CU may be divided into a control plane (CU-CP) and a user plane (CU-UP). The CU-CP is responsible for a control plane function, mainly including radio resource control (radio resource control, RRC) and a packet data convergence protocol (packet data convergence protocol, PDCP) corresponding to the control plane (namely, PDCP-C). The PDCP-C is mainly responsible for data encryption and decryption, integrity protection, data transmission, and the like on the control plane. The CU-UP is responsible for a user plane function, mainly including a service data adaptation protocol (service data adaptation protocol, SDAP) and a PDCP corresponding to the user plane (namely, PDCP-U). The SDAP is mainly responsible for processing data of the core network and mapping a flow (flow) to a bearer. The PDCP-U is mainly responsible for encryption and decryption, integrity protection, header compression, sequence number maintenance, data transmission, and the like on a data plane. The CU-CP and the CU-UP are connected through an E1 interface. The CU-CP, on behalf of the gNB, is connected to the core network through an NG interface and connected to the DU through an F1 interface-control plane (namely, F1-C). The CU-UP is connected to the DU through an Fl interface-user plane, namely, F1-U. It is clear that, in another possible implementation, the PDCP-C is alternatively in the CU-UP.

It may be understood that, in different systems, the CU (including the CU-CP or the CU-UP) or the DU may alternatively have different names, but a person skilled in the art may understand meanings thereof. For example, in an open radio access network (open radio access network, O-RAN) system, the CU may also be referred to as an open CU (open CU, O-CU), the DU may also be referred to as an O-DU, the CU-CP may also be referred to as an O-CU-CP, and the CU-UP may also be referred to as an O-CU-UP. For ease of description, the CU, the CU-CP, the CU-UP, and the DU are used as examples for description in this application. The network device may further include an active antenna unit (active antenna unit, AAU). The CU implements a part of functions of the gNB, and the DU implements a part of functions of the gNB. For example, the CU is responsible for processing a non-real-time protocol and service, to implement functions of an RRC layer. The DU is responsible for processing a physical layer protocol and a real-time service, and implements functions of a radio link control (radio link control, RLC) layer, a media access control (media access control, MAC) layer, and a physical (physical, PHY) layer. In some deployments, the CU may be further divided into a central unit control plane (CU-CP) node and a central unit user plane (CU-UP) node. The CU-CP is responsible for a control plane function, and the CU-UP is responsible for a user plane function.

(2) A core network device is a device on a core network (core network, CN) that provides service support for a terminal. Currently, some examples of the core network device are: an access and mobility management function (access and mobility management function, AMF) entity, a session management function (session management function, SMF) entity, or a user plane function (user plane function, UPF) entity. Details are not listed one by one herein. The AMF entity may be responsible for access management and mobility management of the terminal. The SMF entity may be responsible for session management, for example, session establishment of a user. The UPF entity may be a function entity on a user plane, and is mainly responsible for a connection to an external network. It should be noted that, an entity in this application may also be referred to as a network element or a function entity. For example, the AMF entity may also be referred to as an AMF network element or an AMF function entity. For another example, the SMF entity may also be referred to as an SMF network element or an SMF function entity.

(3) A terminal device in embodiments of this application may also be referred to as user equipment, a mobile station (mobile station, MS), a mobile terminal (mobile terminal, MT), or the like, and is a device that provides voice or data connectivity for a user, or may be an internet of things device. For example, the terminal device includes a handheld device, a vehicle-mounted device, or the like that has a wireless connection function. Currently, the terminal device may be: a mobile phone, a tablet computer, a notebook computer, a palmtop computer, a mobile internet device (mobile internet device, MID), a wearable device (for example, a smartwatch, a smart band, or a pedometer), a vehicle-mounted device (for example, a car, a bicycle, an electric vehicle, an airplane, a ship, a train, or a high-speed railway), a VR device, an AR device, a wireless terminal in industrial control, a smart home device (for example, a refrigerator, a television, an air conditioner, or an electricity meter), a smart robot, a workshop device, a wireless terminal in self-driving, a wireless terminal in telemedicine, a wireless terminal in a smart grid (smart grid), a wireless terminal in transportation safety, a wireless terminal in a smart city, a wireless terminal in a smart home, a flight device (for example, a smart robot, a hot air balloon, an uncrewed aerial vehicle, or an airplane), or the like. The terminal device may alternatively be another device having a terminal function. For example, the terminal device may alternatively be a device that functions as a terminal in D2D communication such as sidelink (sidelink, SL) communication. A terminal device having a wireless transceiver function and a chip that may be disposed in the terminal device are collectively referred to as the terminal device in this application.

(4) XR may include but is not limited to the following forms: AR, VR, and MR.

Usually, an XR service periodically generates data frames at a specific frame rate, and a periodicity of the XR service may not be an integer. The periodicity of the XR service is calculated based on a frame rate (frame rate) X. The frame rate may also be referred to as a frame generation rate. A unit of the frame rate is a quantity of frames transmitted per second (frames per second, fps). The periodicity of the XR service is a reciprocal of the frame rate X. Typical values of the frame rate X include 30 fps, 60 fps, 90 fps, 120 fps, and the like. Table 1 below shows a relationship between the periodicity of the XR service and the frame rate X.

**Table 1 Relationship between the periodicity of the XR service and the frame rate X**

| Frame rate X | Periodicity of the XR service |
|---|---|
| 30 fps | (1/30 fps) seconds (s)=(1/30 fps)×1000 ms=1000/30 milliseconds (ms)=100/3 ms≈33.3333 ms |
| 60 fps | (1/60 fps)s=(1/60 fps)×1000 ms=1000/60 ms=50/3 ms≈16.6667 ms |
| 90 fps | (1/90 fps)s=(1/90 fps)×1000 ms=1000/90 ms=100/9 ms≈11.1111 ms |
| 120 fps | (1/120 fps)s=(1/120 fps)×1000 ms=1000/120 ms=25/3 ms≈8.3333 ms |

In this application, XR data may be data related to an XR service.

The XR data/service usually has a high transmission delay requirement. An uplink AR service is used as an example. A typical packet delay budget (packet delay budget, PDB) of the uplink AR service is 30 ms. To be specific, an upper limit of a transmission delay between arrival of a data packet at an access stratum of a terminal device and arrival of the data packet at an N6 interface of a UPF is 30 ms. If transmission of the data packet does not succeed within a time period required by the PDB, it is considered that the data packet has timed out and is invalid.

Alternatively, a packet set delay budget (PDU Set Delay Budget, PSDB) may also be considered in the XR service. A meaning of the PDU set delay budget is similar to that of the PDB, and an upper limit of a transmission delay of a PDU set (that is, a group of data packets) is defined. For an uplink XR service, the PSDB refers to an upper limit of a time period from arrival of a 1^{st} data packet in the PDU set at the access stratum of the terminal device to arrival of a last data packet at the N6 interface of the UPF. For downlink, the case is reverse.

(5) A PDU set is a set including a plurality of data packets at a transport layer, and corresponds to a minimum granularity for data processing at an application layer. In some application scenarios, the application layer can correctly parse a corresponding data unit only after correctly receiving all data packets in the PDU set. In some other application scenarios, the application layer can parse a corresponding data unit after correctly receiving a specific proportion of data packets in the PDU set.

(6) Data burst (Data burst): According to 3GPP specifications, a burst refers to a group of data PDUs, for example, an XR service frame, generated and sent by an application program in an extremely short period of time. A data burst may include one or more PDU sets.

Currently, for an uplink XR service, to enable a base station to learn of a delay consumption status of data in a buffer of a terminal device, and complete data transmission before a PDB/PSDB is exhausted, 3GPP has reached a conclusion that a concept and a report mechanism of remaining time (remaining time) are introduced in R18.

The remaining time refers to remaining time in which data can be used for air interface transmission. The data herein may be a set including one or more data packets, for example, a PDU set or a data burst. For example, it is assumed that a PDB of a data packet is 20 ms. After the data packet arrives at the buffer of the terminal device, if the data packet is not transmitted after 5 ms, remaining time of the data packet is only 15 ms. In other words, the base station needs to schedule the data packet within 15 ms to ensure transmission of the data packet. Alternatively, the remaining time may be determined based on remaining duration of a discard timer of the data. When the data arrives at the buffer of the terminal device, the terminal device starts a discard timer for the data. After the timer expires, the terminal device discards corresponding data. In other words, data transmission needs to be completed before the discard timer expires. Usually, a length of the discard timer is equal to the PDB/PSDB of the data. Therefore, the remaining duration of the discard timer is equivalent to a remaining PDB/PSDB.

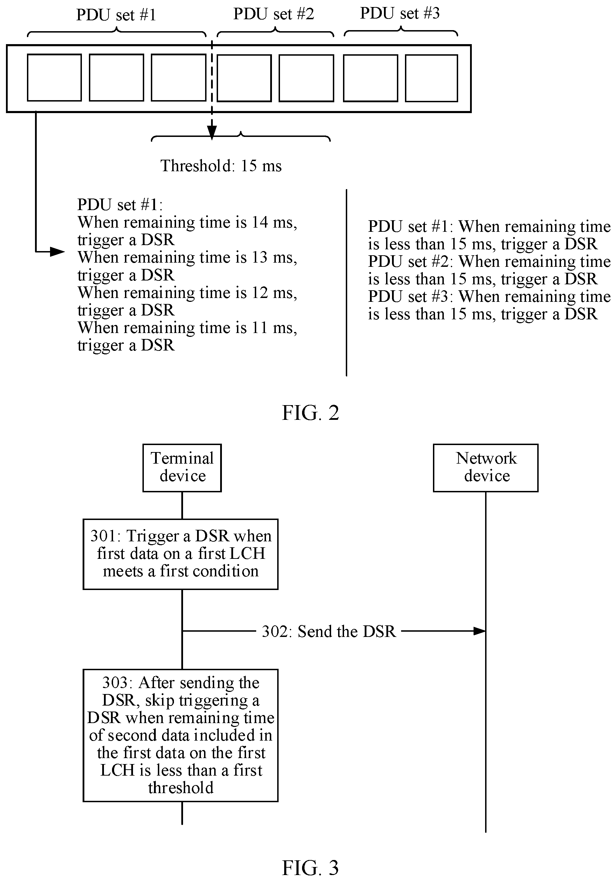

To enable the base station to learn of a data requirement and schedule the data in a timely manner, the terminal device may report remaining time information of the data in the buffer to the base station. Specifically, the terminal device may send a MAC CE to the base station. The MAC CE explicitly or implicitly reflects remaining time of a part or all of data in the buffer of the terminal device, and reflects a data volume corresponding to a period of remaining time. Buffer time may also be a time interval. For example, the terminal device reports a volume of data whose remaining time is less than 10 ms. The MAC CE may be referred to as a DSR. Currently, 3GPP has the following conclusions about the DSR: (1) When remaining time of a PDU or a PDU set in a logical channel group (logical channel group, LCG) is less than a threshold, the DSR is triggered. (2) The threshold is configured by a network for each LCG for the terminal device. After the terminal device triggers the DSR, when an uplink transmission resource is available, the terminal device may send a MAC CE of the DSR on the uplink transmission resource. However, during actual application, the foregoing DSR triggering condition is inappropriate because after the remaining time of the data is less than the threshold, in terms of status, the remaining time of this part of data is always less than the threshold. In other words, the DSR triggering condition is always met. As a result, this part of data is used for triggering DSRs continuously and repeatedly, which may cause a waste of uplink transmission resources. An example in which the threshold corresponding to the LCG is 15 ms is used. As shown in FIG. 2, when remaining time of a PDU set #1 decreases to being less than 15 ms, for example, 14 ms, the DSR triggering condition is met, and UE triggers a DSR. Then, the remaining time of the PDU set #1 continues to decrease, for example, decreases to 13 ms, and the condition of being less than the threshold is still met, the UE continues to trigger a DSR; or for example, decreases to 12 ms, the UE continues to trigger a DSR. In other words, after the remaining time of the PDU set #1 is less than 15 ms, DSRs are continuously and repeatedly triggered because the remaining time of the PDU set #1 is always less than the threshold, which causes a waste of uplink transmission resources.

An embodiment of this application provides a buffer status reporting method. On a terminal device side, the method may be performed by a terminal device or a component (for example, a chip or a circuit) used in the terminal device. On a network side, the method may be performed by a network device or a component (for example, a chip or a circuit) used in the network device. For ease of description, an example in which the method is performed by the terminal device and the network device is used below for description.

As shown in FIG. 3, the buffer status reporting method provided in this embodiment of this application may include the following steps.

Step 301: The terminal device triggers a DSR when first data on a first LCH meets a first condition.

Before step 301, the network device may further configure, for the terminal device, an LCH that can be used for triggering a DSR. For example, the network device sends first configuration information to the terminal device. The first configuration information indicates the terminal device to trigger a DSR when data on any LCH meets the first condition. In this case, the first LCH is any LCH that meets the first condition. Alternatively, the first configuration information includes at least one preset LCH, and the first configuration information indicates the terminal device to trigger a DSR when data on the configured at least one preset LCH meets the first condition. In this case, the first LCH is an LCH that meets the first condition in the configured at least one preset LCH. Alternatively, the first configuration information includes at least one preset LCG, and the first configuration information indicates the terminal device to trigger a DSR when data on an LCH in the configured at least one preset LCG meets the first condition. In this case, the first LCH is an LCH that meets the first condition and that belongs to the configured at least one preset LCG. A specific implementation of the first configuration information is not limited in this application.

In this embodiment of this application, the first data may be one or more data packets, or one or more data frames, or one or more data packet sets (PDU sets), or one or more data bursts (data bursts). This is not limited in this application.

The first condition in step 301 may include that remaining time corresponding to the first data changes from being greater than or equal to a first threshold to being less than the first threshold, or the first condition includes that the remaining time corresponding to the first data changes from being greater than the first threshold to being less than or equal to the first threshold. In the following embodiment, an example in which the first condition includes that the remaining time corresponding to the first data changes from being greater than or equal to the first threshold to being less than the first threshold is used for description, and is also applicable to a case in which the first condition includes that the remaining time corresponding to the first data changes from being greater than the first threshold to being less than or equal to the first threshold.

The remaining time in this embodiment of this application may include any one or more of the following: a remaining delay, a remaining PDB, a remaining PSDB, time/duration to expiration time, time/duration to discarding, and time/duration to expiration of a discard timer. For example, the expiration time may alternatively be a deadline. A concept, a name, a computational process, an obtaining process, and the like of the remaining time are not limited in this application.

For example, if a data granularity of the first data is a data packet, the first data may include a PDU. In this case, the remaining time corresponding to the first data may be the remaining PDB or remaining PDU discard timer duration. For another example, if a data granularity of the first data is a data set, the first data may include a PDU set. In this case, the remaining time corresponding to the first data may be the remaining PSDB or remaining PDU set discard timer duration.

Step 302: The terminal device sends the DSR to the network device.

Correspondingly, the network device receives the DSR.

Step 303: After sending the DSR, skip triggering a DSR when remaining time of second data included in the first data on the first LCH is less than the first threshold.

The second data herein may be a part or all of the first data.

It should be understood that, in step 303, the skipping triggering the DSR when the remaining time of the second data included in the first data on the first LCH is less than the first threshold may occur after the DSR is sent, or may occur after the DSR is triggered. In other words, although the remaining time of the second data included in the first data is less than the first threshold, the second data included in the first data has been used for triggering the DSR, and a DSR is no longer triggered.

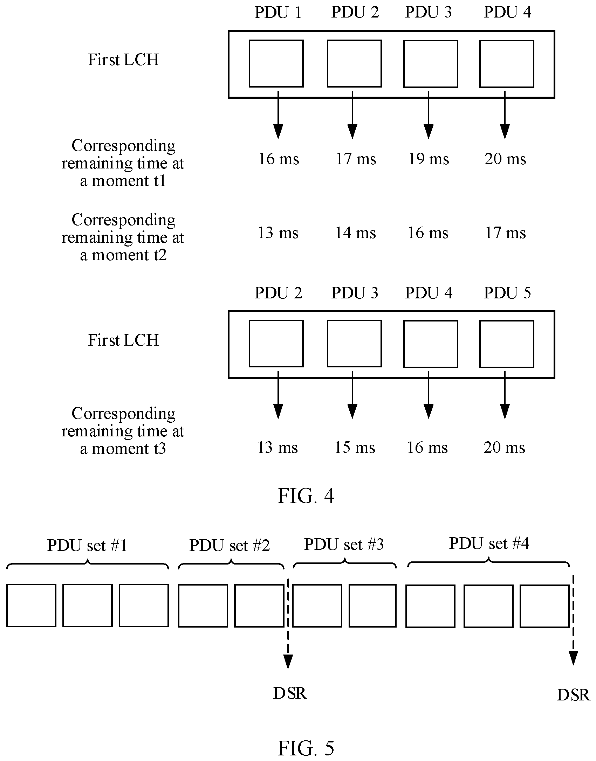

The following uses an example in which the first condition in step 301 includes that the remaining time corresponding to the first data changes from being greater than or equal to the first threshold to being less than the first threshold, to describe the buffer status reporting method with reference to FIG. 4.

As shown in FIG. 4, the first threshold is 15 ms. A PDU 1, a PDU 2, a PDU 3, and a PDU 4 exist on the first LCH. Corresponding remaining time at a moment t1 is respectively 16 ms, 17 ms, 19 ms, and 20 ms. Corresponding remaining time at a moment t2 is respectively 13 ms, 14 ms, 16 ms, and 17 ms. That is, at the moment t2, the remaining time of the PDU 1 and the remaining time of the PDU 2 change from being greater than 15 ms to being less than 15 ms. In this case, the first condition is met. Therefore, the DSR is triggered.

For example, at a moment t3, the PDU 1 on the first LCH has been sent, and on the first LCH, in addition to the PDU 2, the PDU 3, and the PDU 4, new data PDU 5 is further included. Remaining time corresponding to the PDU 2, the PDU 3, the PDU 4, and the PDU 5 is respectively 13 ms, 15 ms, 16 ms, and 20 ms. In this case, on the first LCH, only the remaining time corresponding to the PDU 2 is less than 15 ms. Because the PDU 2 has been used for triggering the DSR, a DSR is no longer triggered in this case. However, because there is no data packet that meets the first condition on the first LCH, a DSR is not triggered at the moment t3.

In the foregoing example, for the first data (for example, the PDU 2), if the remaining time corresponding to the PDU 2 changes from being greater than or equal to the first threshold to being less than the first threshold, a DSR is triggered once. Then, the PDU 2 is not sent from a UE buffer, and the remaining time corresponding to the PDU 2 continues to decrease, that is, the remaining time corresponding to the PDU 2 is always less than the first threshold. In this case, a DSR is no longer triggered either. Therefore, the PDU 2 is used for triggering the DSR only once, so that frequent triggering of DSRs can be avoided, thereby reducing consumption of uplink resources.

In this embodiment of this application, the DSR may include a data volume and remaining time information that correspond to a part or all of data in the UE buffer.

For example, the DSR sent by the terminal device includes a data volume and remaining time information of the PDU 1 or a PDU set 1. The DSR may be a DSR triggered when remaining time corresponding to the PDU 1 or the PDU set 1 changes from being greater than or equal to the first threshold to being less than the first threshold, or may be a DSR triggered when remaining time corresponding to another PDU or another PDU set changes from being greater than or equal to the first threshold to being less than the first threshold. The remaining time corresponding to the PDU 1 or the PDU set 1 is greater than the first threshold, but a DSR MAC CE includes the data volume and the remaining time information of the PDU 1 or the PDU set 1.

There are a plurality of possible implementations for step 301 in the foregoing embodiment.

In a possible implementation 1, the first condition includes that the remaining time corresponding to the first data changes from being greater than or equal to the first threshold to being less than the first threshold and any one of the following condition 1.1 to condition 1.4, and step 301 may be implemented in the following manner: When the remaining time corresponding to the first data on the first LCH changes from being greater than or equal to the first threshold to being less than the first threshold, and any one of the condition 1.1, the condition 1.2, the condition 1.3, and the condition 1.4 is met, the terminal device triggers the DSR.

The following separately describes the condition 1.1, the condition 1.2, the condition 1.3, and the condition 1.4.

Condition 1.1: No data exists on a second LCH, and the second LCH is different from the first LCH.

Based on the condition 1.1, step 301 may be implemented in the following manner: When the remaining time corresponding to the first data on the first LCH changes from being greater than or equal to the first threshold to being less than the first threshold, and no data exists on the second LCH, the terminal device triggers the DSR.

Correspondingly, when the remaining time corresponding to the first data changes from being greater than or equal to the first threshold to being less than the first threshold, and data exists on the second LCH, the DSR is not triggered.

Because after the DSR is triggered, the MAC CE used for transmission of the DSR needs to consume a specific uplink resource, a resource of other to-be-transmitted data may be occupied. When the remaining time corresponding to the first data changes from being greater than or equal to the first threshold to being less than the first threshold, if no data exists on an LCH other than the first LCH, the DSR is triggered, and then the DSR is sent to the network device. After the DSR is triggered once, the remaining time corresponding to the first data continues to decrease, and that the remaining time is less than the first threshold and no data exists on the another LCH are still met. In this case, a DSR is no longer triggered either. In other words, the first data is used for triggering the DSR only once. When the remaining time corresponding to the first data changes from being greater than or equal to the first threshold to being less than the first threshold, if data exists on an LCH (for example, the second LCH) other than the first LCH, the DSR is not triggered, so that it can be ensured that the other to-be-transmitted data can be preferentially sent.

Condition 1.2: No data whose remaining time is less than the first threshold exists on the second LCH. Data whose remaining time is less than the first threshold may also be referred to as emergency data.

Based on the condition 1.2, step 301 may be implemented in the following manner: When the remaining time corresponding to the first data on the first LCH changes from being greater than or equal to the first threshold to being less than the first threshold, and no data whose remaining time is less than the first threshold exists on the second LCH, the terminal device triggers the DSR.

Correspondingly, when the remaining time corresponding to the first data changes from being greater than or equal to the first threshold to being less than the first threshold, and the data whose remaining time is less than the first threshold exists on the second LCH, the DSR is not triggered.

Because after the DSR is triggered, the MAC CE used for transmission of the DSR needs to consume a specific uplink resource, a resource of other to-be-transmitted data may be occupied. When the remaining time corresponding to the first data changes from being greater than or equal to the first threshold to being less than the first threshold, if no data (that is, the emergency data) whose remaining time is less than the first threshold exists on an LCH other than the first LCH, the DSR is triggered, and then the DSR is sent to the network device. After that, even if the remaining time corresponding to the first data continues to decrease, that the remaining time is less than the first threshold and no emergency data exists on the another LCH are still met. In this case, a DSR is no longer triggered either. In other words, the first data is used for triggering the DSR only once. When the remaining time corresponding to the first data changes from being greater than or equal to the first threshold to being less than the first threshold, if data (that is, emergency data) whose remaining time is less than the first threshold exists on an LCH (for example, the second LCH) other than the first LCH, the DSR is not triggered, so that it can be ensured that the emergency data can be preferentially sent.

Condition 1.3: A priority of the first LCH is higher than a priority of a third LCH, data exists on the third LCH, and the third LCH is different from the first LCH.

Based on the condition 1.3, step 301 may be implemented in the following manner: When the remaining time corresponding to the first data on the first LCH changes from being greater than or equal to the first threshold to being less than the first threshold, and the priority of the first LCH is higher than a priority of another LCH on which data exists, the terminal device triggers the DSR. Data whose remaining time is less than the first threshold may also be referred to as emergency data.

Correspondingly, when the remaining time corresponding to the first data changes from being greater than or equal to the first threshold to being less than the first threshold, and the priority of the first LCH is lower than the priority of the third LCH, the DSR is not triggered.

Because after the DSR is triggered, the MAC CE used for transmission of the DSR needs to consume a specific uplink resource, a resource of other to-be-transmitted data may be occupied. When the remaining time corresponding to the first data changes from being greater than or equal to the first threshold to being less than the first threshold, if the priority of the first LCH is higher than a priority of another LCH on which data exists, the DSR is triggered, and then the DSR is sent to the network device. After that, even if the remaining time corresponding to the first data continues to decrease, that the remaining time is less than the first threshold and the priority of the first LCH is higher than the priority of the another LCH on which data exists are still met. In this case, a DSR is no longer triggered either. In other words, the first data is used for triggering the DSR only once. When the remaining time corresponding to the first data changes from being greater than or equal to the first threshold to being less than the first threshold, if data exists on another LCH (for example, the third LCH) with a higher priority, the DSR is not triggered, so that it can be ensured that data with a higher priority can be preferentially sent.

Condition 1.4: The priority of the first LCH is higher than a priority of a fourth LCH, data whose remaining time is less than the first threshold exists on the fourth LCH, and the fourth LCH is different from the first LCH.

Based on the condition 1.4, step 301 may be implemented in the following manner: When the remaining time corresponding to the first data on the first LCH changes from being greater than or equal to the first threshold to being less than the first threshold, and the priority of the first LCH is higher than a priority of another LCH on which data whose remaining time is less than the first threshold exists, the terminal device triggers the DSR.

Correspondingly, when the remaining time corresponding to the first data changes from being greater than or equal to the first threshold to being less than the first threshold, and the priority of the first LCH is lower than the priority of the fourth LCH, the DSR is not triggered.

Because after the DSR is triggered, the MAC CE used for transmission of the DSR needs to consume a specific uplink resource, a resource of other to-be-transmitted data may be occupied. When the remaining time corresponding to the first data changes from being greater than or equal to the first threshold to being less than the first threshold, if the priority of the first LCH is higher than a priority of another LCH on which data whose remaining time is less than the first threshold exists, the DSR is triggered, and then the DSR is sent to the network device. After that, even if the remaining time corresponding to the first data continues to decrease, that the remaining time is less than the first threshold and the priority of the first LCH is higher than the priority of the another LCH on which data whose remaining time is less than the first threshold exists are still met. In this case, a DSR is no longer triggered either. In other words, the first data is used for triggering the DSR only once. When the remaining time corresponding to the first data changes from being greater than or equal to the first threshold to being less than the first threshold, if data whose remaining time is less than the first threshold (the data whose remaining time is less than the first threshold is referred to as emergency data) exists on another LCH (for example, the fourth LCH) with a higher priority, the DSR is not triggered, so that it can be ensured that emergency data with a higher priority can be preferentially sent.

In some other embodiments, step 301 may alternatively be implemented in the following manner: When emergency data on the first LCH meets any one of a condition 1.5, a condition 1.6, a condition 1.7, a condition 1.8, and a condition 1.9, the terminal device triggers the DSR.

The following separately describes the condition 1.5, the condition 1.6, the condition 1.7, the condition 1.8, and the condition 1.9.

Condition 1.5: The emergency data becomes available. The emergency data may be data whose remaining time is less than the first threshold.

Condition 1.6: The emergency data becomes available, no data exists on the second LCH, and the second LCH is different from the first LCH.

Condition 1.7: The emergency data becomes available, no data whose remaining time is less than the first threshold exists on the second LCH, and the second LCH is different from the first LCH.

Condition 1.8: The emergency data becomes available, the priority of the first LCH is higher than the priority of the third LCH, data exists on the third LCH, and the third LCH is different from the first LCH.

Condition 1.9: The emergency data becomes available, the priority of the first LCH is higher than the priority of the fourth LCH, data whose remaining time is less than the first threshold exists on the fourth LCH, and the fourth LCH is different from the first LCH.

In the foregoing condition 1.5 to condition 1.9, that the emergency data becomes available may be understood as that the emergency data may be sent. Specifically, the emergency data has been processed by upper-layer protocol stacks such as an SDAP layer, a PDCP layer, and an RLC layer, and arrives at a MAC layer. The MAC layer may encapsulate the emergency data into a MAC PDU and then send the MAC PDU.

In any one of the foregoing embodiments, an example in which one remaining time threshold (that is, the first threshold) is set is used for description. In some other embodiments, a plurality of remaining time thresholds may be set, for example, 15 ms, 10 ms, and 5 ms. A threshold 1 is greater than a threshold 2, and the threshold 2 is greater than a threshold 3. For the first data, when the remaining time corresponding to the first data changes from being greater than or equal to 15 ms to being less than 15 ms, a DSR is triggered once; when the remaining time corresponding to the first data changes from being greater than or equal to 10 ms to being less than 10 ms, a DSR is triggered once; and when the remaining time corresponding to the first data changes from being greater than or equal to 5 ms to being less than 5 ms, a DSR is triggered once. A case in which a plurality of remaining time thresholds are set is also applicable to any one of possible implementations 2 to 6. Details are not described below again.

In a possible implementation 2, the first condition includes that the remaining time corresponding to the first data changes from being greater than or equal to the first threshold to being less than the first threshold and any one of the following condition 2.1 to condition 2.5, and step 301 may be implemented in the following manner: When the remaining time corresponding to the first data on the first LCH changes from being greater than or equal to the first threshold to being less than the first threshold, and any one of the condition 2.1, the condition 2.2, the condition 2.3, the condition 2.4, and the condition 2.5 is met, the terminal device triggers the DSR.

Condition 2.1: The first data corresponds to high importance.

Based on the condition 2.1, step 301 may be implemented in the following manner: When the remaining time corresponding to the first data on the first LCH changes from being greater than or equal to the first threshold to being less than the first threshold, and the first data corresponds to the high importance, the terminal device triggers the DSR.

Correspondingly, when the remaining time corresponding to the first data changes from being greater than or equal to the first threshold to being less than the first threshold, and the first data corresponds to low importance, the DSR is not triggered.

When network congestion occurs, the network device may send first indication information to the terminal device, where the first indication information indicates the terminal device to preferentially trigger the DSR for data of high importance, or the first indication information indicates the terminal device to trigger the DSR for the data of high importance. Optionally, the first indication information further indicates not to trigger the DSR for data of low importance.

In an XR service, a same data flow may include data of different degrees of importance. This is caused by an encoding scheme of an application. An XR video service is used as an example. During data encoding, the application may use an independent encoding scheme for a part of video frames, and use an inter-frame predictive encoding scheme for remaining video frames, to compress a volume of data to be transmitted. Data obtained through independent encoding on the video frame includes complete information of the video frame, and a receive end can restore a complete video frame by processing only the data. Data obtained through inter-frame predictive encoding on the video frame includes only partial information of the video frame. In addition to processing the data, the receive end further needs to combine data of a video frame other than the video frame to restore a complete video frame. For example, in a live broadcast image, a background usually does not change. Therefore, complete data only needs to be transmitted when a first frame of video is transmitted. Only data of a change of a foreground character needs to be transmitted in a subsequent video frame, and background data is no longer transmitted. A receive end player needs to generate an image of the subsequent video frame by using the background data of the first frame. Apparently, in this manner, data in an independent encoding scheme is of higher importance than data in an inter-frame predictive encoding scheme, because the data not only affects playing of a current video frame, but also affects playing of another video frame that has a dependency relationship with the current video frame.

In a possible implementation, the terminal device may determine importance of data based on a PDU set importance (PDU set importance, PSI) feature. Currently, 3GPP has agreed to introduce a concept of PSI to indicate relative importance of a PDU set. A value of PSI may range from 0 to 15. A value 0 of PSI indicates the highest importance, a value 15 of PSI indicates the lowest importance, and so on. An application layer may add PSI information to generated data, to enable the terminal device to learn of importance of the data. Specifically, the application layer adds PSI whose value ranges from 0 to 15 to a packet header of each data packet, and the terminal device determines importance of data by reading a value of PSI in the data packet header.

For example, when the first data is a data packet or a PDU, the terminal device reads PSI of a data packet received from the application layer. When PSI is less than a first threshold value, the data packet is data of high importance; or when PSI is greater than or equal to a first threshold value, the data packet is a data packet of low importance. The first threshold value may be determined by the terminal device, or may be configured by the network device for the terminal device.

For example, when the first data is a PDU set, the terminal device reads PSI of a data packet received from the application layer. When PSI is less than a first threshold value, a PDU set to which the data packet belongs is data of high importance; or when PSI is greater than or equal to a first threshold value, a PDU set to which the data packet belongs is a data packet of low importance.

For example, when the first data is a data burst, the terminal device reads PSI of a data packet received from the application layer. When PSI is less than a first threshold value, a data burst to which the data packet belongs is data of high importance; or when PSI is greater than or equal to a first threshold value, a data burst to which the data packet belongs is a data packet of low importance.

In another possible implementation, the terminal device determines the importance of the data based on implementation of the terminal device. For example, when the application layer does not provide the PSI information, or the terminal device cannot identify the PSI information, the terminal device may determine the importance of the data.

For example, the terminal device may determine the importance of the data based on a data volume of the data. This is because data of high importance usually carries more application layer information and therefore has a larger data payload.

For example, when the first data is a data burst, the terminal device calculates a data volume of a received data burst. When the data volume of the data burst is greater than or equal to a second threshold value, the data burst is data of high importance; or when the data volume of the data burst is less than a second threshold value, the data burst is data of low importance. The second threshold value may be determined by the terminal device, or configured by the network device for the terminal device.

For example, when the first data is a PDU set, the terminal device calculates a data volume of a received PDU set. When the data volume of the PDU set is greater than or equal to a second threshold value, the PDU set is data of high importance; or when the data volume of the PDU set is less than a second threshold value, the PDU set is data of low importance. Alternatively, the terminal device calculates a data volume of a received data burst. When the data volume of the data burst is greater than a specific value, a PDU set included in the data burst is data of high importance; or when the data volume of the data burst is less than a specific value, a PDU set included in the data burst is data of low importance.

For example, when the first data is a data packet or a PDU, the terminal device calculates a data volume of a received PDU set. When the data volume of the PDU set is greater than a second threshold value, a PDU included in the PDU set is data of high importance; or when the data volume is less than a second threshold value, a PDU included in the PDU set is data of low importance. Alternatively, the terminal device calculates a data volume of a received data burst. When the data volume of the data burst is greater than a second threshold value, a PDU included in the data burst is data of high importance; or when the data volume of the data burst is less than a second threshold value, a PDU included in the data burst is data of low importance.

The terminal device may alternatively determine the importance of the data based on another implementation, for example, based on machine learning or artificial intelligence. This is not limited in the present invention.

It should be understood that, for a manner of determining importance of data below, refer to descriptions in the condition 2.1. Details are not described below again.

Condition 2.2: The first data corresponds to the high importance, no data exists on a second LCH, and the second LCH is different from the first LCH.

Based on the condition 2.2, step 301 may be implemented in the following manner: When the remaining time corresponding to the first data on the first LCH changes from being greater than or equal to the first threshold to being less than the first threshold, the first data corresponds to the high importance, and no data exists on the second LCH, the DSR is triggered.

Correspondingly, when the remaining time corresponding to the first data changes from being greater than or equal to the first threshold to being less than the first threshold, the first data corresponds to low importance, and no data exists on the second LCH, the DSR is not triggered. Alternatively, when the remaining time corresponding to the first data changes from being greater than or equal to the first threshold to being less than the first threshold, the first data corresponds to low importance, and data exists on the second LCH, the DSR is not triggered. Alternatively, when the remaining time corresponding to the first data changes from being greater than or equal to the first threshold to being less than the first threshold, the first data corresponds to the high importance, and data exists on the second LCH, the DSR is not triggered.

Condition 2.3: The first data corresponds to the high importance, and no data whose remaining time is less than the first threshold exists on the second LCH.

Based on the condition 2.3, step 301 may be implemented in the following manner: When the remaining time corresponding to the first data on the first LCH changes from being greater than or equal to the first threshold to being less than the first threshold, the first data corresponds to the high importance, and no data whose remaining time is less than the first threshold exists on the second LCH, the DSR is triggered.

Correspondingly, when the remaining time corresponding to the first data changes from being greater than or equal to the first threshold to being less than the first threshold, the first data corresponds to low importance, and no data whose remaining time is less than the first threshold exists on the second LCH, the DSR is not triggered. Alternatively, when the remaining time corresponding to the first data changes from being greater than or equal to the first threshold to being less than the first threshold, the first data corresponds to low importance, and data whose remaining time is less than the first threshold exists on the second LCH, the DSR is not triggered. Alternatively, when the remaining time corresponding to the first data changes from being greater than or equal to the first threshold to being less than the first threshold, the first data corresponds to the high importance, and data whose remaining time is less than the first threshold exists on the second LCH, the DSR is not triggered.

Condition 2.4: The first data corresponds to the high importance, a priority of the first LCH is higher than a priority of a third LCH, data exists on the third LCH, and the third LCH is different from the first LCH.

Based on the condition 2.4, step 301 may be implemented in the following manner: When the remaining time corresponding to the first data on the first LCH changes from being greater than or equal to the first threshold to being less than the first threshold, the first data corresponds to the high importance, and the priority of the first LCH is higher than the priority of the third LCH, the DSR is triggered.

Correspondingly, when the remaining time corresponding to the first data changes from being greater than or equal to the first threshold to being less than the first threshold, the first data corresponds to low importance, and the priority of the first LCH is higher than the priority of the third LCH, the DSR is not triggered. Alternatively, when the remaining time corresponding to the first data changes from being greater than or equal to the first threshold to being less than the first threshold, the first data corresponds to low importance, and the priority of the first LCH is lower than the priority of the third LCH, the DSR is not triggered. Alternatively, when the remaining time corresponding to the first data changes from being greater than or equal to the first threshold to being less than the first threshold, the first data corresponds to the high importance, and the priority of the first LCH is lower than the priority of the third LCH, the DSR is not triggered.

Condition 2.5: The first data corresponds to the high importance, the priority of the first LCH is higher than a priority of a fourth LCH, data whose remaining time is less than the first threshold exists on the fourth LCH, and the fourth LCH is different from the first LCH.

Based on the condition 2.5, step 301 may be implemented in the following manner: When the remaining time corresponding to the first data on the first LCH changes from being greater than or equal to the first threshold to being less than the first threshold, the first data corresponds to the high importance, and the priority of the first LCH is higher than the priority of the fourth LCH, the DSR is triggered.

Correspondingly, when the remaining time corresponding to the first data changes from being greater than or equal to the first threshold to being less than the first threshold, the first data corresponds to low importance, and the priority of the first LCH is higher than the priority of the fourth LCH, the DSR is not triggered. Alternatively, when the remaining time corresponding to the first data changes from being greater than or equal to the first threshold to being less than the first threshold, the first data corresponds to low importance, and the priority of the first LCH is lower than the priority of the fourth LCH, the DSR is not triggered. Alternatively, when the remaining time corresponding to the first data changes from being greater than or equal to the first threshold to being less than the first threshold, the first data corresponds to the high importance, and the priority of the first LCH is lower than the priority of the fourth LCH, the DSR is not triggered.

In a possible implementation 3, the first condition includes that the remaining time corresponding to the first data changes from being greater than or equal to the first threshold to being less than the first threshold and any one of the following condition 3.1 to condition 3.4, that is, when the remaining time corresponding to the first data on the first LCH changes from being greater than or equal to the first threshold to being less than the first threshold, and any one of the condition 3.1, the condition 3.2, the condition 3.3, and the condition 3.4 is met, the terminal device triggers the DSR.

Condition 3.1: The first data corresponds to high importance, no data of high importance exists on a second LCH, and the second LCH is different from the first LCH.

Based on the condition 3.1, step 301 may be implemented in the following manner: When the remaining time corresponding to the first data on the first LCH changes from being greater than or equal to the first threshold to being less than the first threshold, the first data corresponds to the high importance, and no data of high importance exists on the second LCH, the DSR is triggered.

Correspondingly, when the remaining time corresponding to the first data changes from being greater than or equal to the first threshold to being less than the first threshold, the first data corresponds to low importance, and no data of high importance exists on the second LCH, the DSR is not triggered. Alternatively, when the remaining time corresponding to the first data changes from being greater than or equal to the first threshold to being less than the first threshold, the first data corresponds to low importance, and data of high importance exists on the second LCH, the DSR is not triggered. Alternatively, when the remaining time corresponding to the first data changes from being greater than or equal to the first threshold to being less than the first threshold, the first data corresponds to the high importance, and data of high importance exists on the second LCH, the DSR is not triggered.

Condition 3.2: The first data corresponds to the high importance, and no data that is of high importance and whose remaining time is less than the first threshold exists on the second LCH, and the second LCH is different from the first LCH.

Based on the condition 3.2, step 301 may be implemented in the following manner: When the remaining time corresponding to the first data on the first LCH changes from being greater than or equal to the first threshold to being less than the first threshold, the first data corresponds to the high importance, and no data that is of high importance and whose remaining time is less than the first threshold exists on the second LCH, the DSR is triggered.

Correspondingly, when the remaining time corresponding to the first data changes from being greater than or equal to the first threshold to being less than the first threshold, the first data corresponds to low importance, and no data that is of high importance and whose remaining time is less than the first threshold exists on the second LCH, the DSR is not triggered. Alternatively, when the remaining time corresponding to the first data changes from being greater than or equal to the first threshold to being less than the first threshold, the first data corresponds to low importance, and data that is of high importance and whose remaining time is less than the first threshold exists on the second LCH, the DSR is not triggered. Alternatively, when the remaining time corresponding to the first data changes from being greater than or equal to the first threshold to being less than the first threshold, the first data corresponds to the high importance, and data that is of high importance and whose remaining time is less than the first threshold exists on the second LCH, the DSR is not triggered.

Condition 3.3: The first data corresponds to the high importance, a priority of the first LCH is higher than a priority of a fifth LCH, data of high importance exists on the fifth LCH, and the fifth LCH is different from the first LCH.

Based on the condition 3.3, step 301 may be implemented in the following manner: When the remaining time corresponding to the first data on the first LCH changes from being greater than or equal to the first threshold to being less than the first threshold, the first data corresponds to the high importance, and the priority of the first LCH is higher than the priority of the fifth LCH, the DSR is triggered.

Correspondingly, when the remaining time corresponding to the first data changes from being greater than or equal to the first threshold to being less than the first threshold, the first data corresponds to low importance, and the priority of the first LCH is higher than the priority of the fifth LCH, the DSR is not triggered. Alternatively, when the remaining time corresponding to the first data changes from being greater than or equal to the first threshold to being less than the first threshold, the first data corresponds to low importance, and the priority of the first LCH is lower than the priority of the fifth LCH, the DSR is not triggered. Alternatively, when the remaining time corresponding to the first data changes from being greater than or equal to the first threshold to being less than the first threshold, the first data corresponds to the high importance, and the priority of the first LCH is lower than the priority of the fifth LCH, the DSR is not triggered.

Condition 3.4: The first data corresponds to the high importance, the priority of the first LCH is higher than a priority of a sixth LCH, data that is of high importance and whose remaining time is less than the first threshold exists on the sixth LCH, and the sixth LCH is different from the first LCH.

Based on the condition 3.4, step 301 may be implemented in the following manner: When the remaining time corresponding to the first data on the first LCH changes from being greater than or equal to the first threshold to being less than the first threshold, the first data corresponds to the high importance, and the priority of the first LCH is higher than the priority of the sixth LCH, the DSR is triggered.

Correspondingly, when the remaining time corresponding to the first data changes from being greater than or equal to the first threshold to being less than the first threshold, the first data corresponds to low importance, and the priority of the first LCH is higher than the priority of the sixth LCH, the DSR is not triggered. Alternatively, when the remaining time corresponding to the first data changes from being greater than or equal to the first threshold to being less than the first threshold, the first data corresponds to low importance, and the priority of the first LCH is lower than the priority of the sixth LCH, the DSR is not triggered. Alternatively, when the remaining time corresponding to the first data changes from being greater than or equal to the first threshold to being less than the first threshold, the first data corresponds to the high importance, and the priority of the first LCH is lower than the priority of the sixth LCH, the DSR is not triggered.

In a possible implementation 4, the first condition includes that the remaining time corresponding to the first data changes from being greater than or equal to the first threshold to being less than the first threshold and any one of the following condition 4.1 to condition 4.4, that is, when the remaining time corresponding to the first data on the first LCH changes from being greater than or equal to the first threshold to being less than the first threshold, and any one of the condition 4.1, the condition 4.2, the condition 4.3, and the condition 4.4 is met, the terminal device triggers the DSR. In the possible implementation 4, the first data may include one or more pieces of data, and the first data does not include data that has been used for triggering a DSR.

The following separately describes the condition 4.1, the condition 4.2, the condition 4.3, and the condition 4.4.

Condition 4.1: A data volume corresponding to the first data is greater than or equal to a second threshold.

Based on the condition 4.1, the first condition includes: the remaining time corresponding to the first data changes from being greater than or equal to the first threshold to being less than the first threshold, and the data volume corresponding to the first data is greater than or equal to the second threshold. Step 301 may be implemented in the following manner: When the remaining time corresponding to the first data on the first LCH changes from being greater than or equal to the first threshold to being less than the first threshold, and the data volume corresponding to the first data is greater than or equal to the second threshold, the terminal device triggers the DSR. Correspondingly, when the remaining time corresponding to the first data on the first LCH changes from being greater than or equal to the first threshold to being less than the first threshold, and the data volume corresponding to the first data is less than the second threshold, the terminal device does not trigger the DSR.

The first data may include one or more pieces of data. When the first data includes a plurality of pieces of data, that the remaining time corresponding to the first data changes from being greater than or equal to the first threshold to being less than the first threshold includes: remaining time corresponding to a first part of data in the plurality of pieces of data included in the first data all changes from being greater than or equal to the first threshold to being less than the first threshold, and remaining time corresponding to a second part of data in the plurality of pieces of data included in the first data is all less than the first threshold. The first part of data and the second part of data form the plurality of pieces of data.

In this embodiment of this application, for each LCH or LCG that can be used for triggering a DSR, the terminal device may maintain an emergency data volume. An emergency data volume maintained for the first LCH is used as an example. An initial value of the emergency data volume corresponding to the first LCH is set to 0. Each time remaining time of data on the first LCH changes from being greater than or equal to the first threshold to being less than the first threshold, a data volume of the data whose remaining time changes from being greater than or equal to the first threshold to being less than the first threshold is accumulated to the emergency data volume. In this way, the first condition based on the condition 4.1 may be understood as that the emergency data volume corresponding to the first LCH is greater than or equal to the second threshold, where the emergency data volume corresponding to the first LCH includes the data volume corresponding to the data whose remaining time on the first LCH changes from being greater than or equal to the first threshold to being less than the first threshold. Step 301 may be implemented in the following manner: When the emergency data volume corresponding to the first LCH is greater than or equal to the second threshold, the DSR is triggered. After the DSR is triggered, the emergency data volume corresponding to the first LCH is reset (or updated) to 0. Correspondingly, when the emergency data volume corresponding to the first LCH is less than the second threshold, the DSR is not triggered.

In a possible implementation, after sending the DSR, the terminal device may reset (or update) the emergency data volume corresponding to the first LCH to 0. The DSR is not sent immediately after being triggered, and can be sent only when an uplink resource is available. Therefore, the emergency data volume may be reset to 0 after the DSR is sent.

For example, a data granularity for triggering the DSR is a PDU set, and the second threshold is 5000 bytes. A data volume of a PDU set 1 is 3000 bytes, a data volume of a PDU set 2 is 3000 bytes, a data volume of a PDU set 3 is 2500 bytes, and a data volume of a PDU set 4 is 3000 bytes.

At a moment t1, remaining time corresponding to the PDU set 1 changes from being greater than or equal to the first threshold to being less than the first threshold, and remaining time corresponding to the PDU set 2 and remaining time corresponding to the PDU set 3 are still greater than the first threshold. In this case, the emergency data volume includes the data volume of the PDU set 1, that is, 3000 bytes. At a moment t2, remaining time corresponding to the PDU set 2 changes from being greater than or equal to the first threshold to being less than the first threshold, and the moment t2 is a moment after the moment t1. In this case, the data volume of the PDU set 2 is accumulated to the emergency data volume. In this case, the emergency data volume includes the data volume of the PDU set 1 whose remaining time is less than the first threshold and the data volume of the PDU set 2 whose remaining time changes from being greater than or equal to the first threshold to being less than the first threshold, that is, the emergency data volume is 5000 bytes. In this case, the emergency data volume is equal to the second threshold, and a DSR is triggered once. Then, the emergency data volume is reset to 0.

After the emergency data volume is reset to 0, at a moment t3, remaining time corresponding to the PDU set 3 changes from being greater than or equal to the first threshold to being less than the first threshold, and the data volume of the PDU set 3 is accumulated to the emergency data volume. In other words, in this case, the emergency data volume includes the data volume of the PDU set 3, that is, 2500 bytes. At a moment t4, remaining time corresponding to the PDU set 4 changes from being greater than or equal to the first threshold to being less than the first threshold, and the data volume of the PDU set 4 is accumulated to the emergency data volume. In other words, in this case, the emergency data volume includes the data volume of the PDU set 3 and the data volume of the PDU set 4, that is, 5500 bytes. In this case, the emergency data volume is greater than the second threshold, and a DSR is triggered once. Then, the emergency data volume is reset to 0.

In a possible implementation, the emergency data volume may be maintained by one or more of a PDCP layer, an RLC layer, and a MAC layer of the terminal device. For example, when finding that remaining time of data on a PDCP entity corresponding to the first LCH changes from being greater than or equal to the first threshold to being less than the first threshold, the PDCP layer indicates, to the MAC layer, a data volume of the data whose remaining time changes from being greater than or equal to the first threshold to being less than the first threshold. When finding that remaining time of data on an RLC entity corresponding to the first LCH changes from being greater than or equal to the first threshold to being less than the first threshold, the RLC layer indicates, to the MAC layer, a data volume of the data whose remaining time changes from being greater than or equal to the first threshold to being less than the first threshold. The MAC layer uses a sum of the data volume indicated by the PDCP layer and the data volume indicated by the RLC layer as the emergency data volume of the first LCH.

The second threshold in this embodiment of this application is preset (for example, defined in a protocol) or indicated by the network device to the terminal device. When a value of the second threshold is 0, an effect of the buffer status reporting method implemented based on the condition 3.1 is consistent with that of the buffer status reporting method implemented based on the first condition in step 301. When the value of the second threshold is greater than 0, compared with the buffer status reporting method implemented based on the first condition in step 301, the buffer status reporting method implemented based on the condition 3.1 can effectively reduce a DSR triggering frequency, so that excessively frequent triggering of DSRs can be avoided, thereby reducing network resource overheads. Related content of the second threshold is not described again in the following.

The following uses examples to describe a case in which the second threshold is 0 and a case in which the second threshold is greater than 0 with reference to FIG. 5.

PDU sets #1 to #4 shown in FIG. 5 arrive at the buffer of the terminal device in sequence. It is assumed that an arrival moment of the PDU set #1 is T1, an arrival moment of the PDU set #2 is T2, an arrival moment of the PDU set #3 is T3, and an arrival moment of the PDU set #4 is T4. It is assumed that PSDBs of the PDU sets #1 to #4 are 20 ms, and a remaining time threshold (that is, the first threshold) is 15 ms. According to the solution of the embodiment shown in FIG. 3, or according to a solution in which an emergency data volume threshold (that is, the second threshold) is 0, the UE needs to trigger the DSR at T1-5 ms, T2-5 ms, T3-5 ms, and T4-5 ms respectively, which may consume four uplink resources. However, time at which the PDU sets #1 to #4 arrive at the buffer of the terminal device is very close. For example, the PDU sets #1 to #4 belong to a same data burst. In this case, frequent triggering of DSRs is unnecessary. For example, the UE reports, at T1-5 ms, that a volume of data (the PDU set #1) whose remaining time is less than 15 ms is 3000 bytes, and reports, at T2-5 ms, that a volume of data (the PDU set #1 and the PDU set #2) whose remaining time is less than 15 ms is 5000 bytes. A difference between T1 and T2 does not exceed 1 ms. Therefore, the two pieces of reported information are greatly repeated.

The emergency data volume threshold is set to a value greater than 0, which can effectively reduce DSR triggering frequency. For example, as shown in FIG. 5, the emergency data volume threshold can accommodate five data packets. The terminal device only needs to trigger a DSR once at T2-5 ms, and trigger a DSR once at T4-5 ms. A total of two DSRs are triggered. Therefore, consumption of uplink resources caused by the DSR can be greatly reduced.

Condition 4.2: The data volume corresponding to the first data is greater than or equal to the second threshold, and any one of the foregoing condition 1.1 to condition 1.4 is met.

Based on the condition 4.2, the first condition includes: the remaining time corresponding to the first data changes from being greater than or equal to the first threshold to being less than the first threshold, the data volume corresponding to the first data is greater than or equal to the second threshold, and any one of the foregoing condition 1.1 to condition 1.4 is met. Step 301 may be implemented in any one of the following manners:

Manner 1: When remaining time corresponding to one or more pieces of data included in the first data on the first LCH changes from being greater than or equal to the first threshold to being less than the first threshold, the data volume corresponding to the first data is greater than or equal to the second threshold, and no data exists on the second LCH, the terminal device triggers the DSR. The second LCH is different from the first LCH.

Referring to the foregoing condition 4.1, the terminal device maintains an emergency data volume for each LCH or LCG. Step 301 may be implemented in the following manner: When the emergency data volume corresponding to the first LCH is greater than or equal to the second threshold, and no data exists on the second LCH, the DSR is triggered. Correspondingly, when the emergency data volume corresponding to the first LCH is less than the second threshold, and no data exists on the second LCH, the DSR is not triggered. Alternatively, when the emergency data volume corresponding to the first LCH is less than the second threshold, and data exists on the second LCH, the DSR is not triggered. Alternatively, when the emergency data volume corresponding to the first LCH is greater than or equal to the second threshold, and data exists on the second LCH, the DSR is not triggered.

Manner 2: When the remaining time corresponding to the one or more pieces of data included in the first data on the first LCH changes from being greater than or equal to the first threshold to being less than the first threshold, the data volume corresponding to the first data is greater than or equal to the second threshold, and no data whose remaining time is less than the first threshold exists on the second LCH, the terminal device triggers the DSR.

Correspondingly, when the remaining time corresponding to the first data changes from being greater than or equal to the first threshold to being less than the first threshold, the data volume corresponding to the first data is greater than or equal to the second threshold, and data whose remaining time is less than the first threshold exists on the second LCH, the DSR is not triggered. Alternatively, when the remaining time corresponding to the first data changes from being greater than or equal to the first threshold to being less than the first threshold, the data volume corresponding to the first data is less than the second threshold, and data whose remaining time is less than the first threshold exists on the second LCH, the DSR is not triggered. Alternatively, when the remaining time corresponding to the first data changes from being greater than or equal to the first threshold to being less than the first threshold, the data volume corresponding to the first data is less than the second threshold, and no data whose remaining time is less than the first threshold exists on the second LCH, the DSR is not triggered.

Referring to the foregoing condition 4.1, the terminal device maintains an emergency data volume for each LCH or LCG. Step 301 may be implemented in the following manner: When the emergency data volume corresponding to the first LCH is greater than or equal to the second threshold, and no data whose remaining time is less than the first threshold exists on the second LCH, the DSR is triggered. Correspondingly, when the emergency data volume corresponding to the first LCH is greater than or equal to the second threshold, and data whose remaining time is less than the first threshold exists on the second LCH, the DSR is not triggered. Alternatively, when the emergency data volume corresponding to the first LCH is less than the second threshold, and no data whose remaining time is less than the first threshold exists on the second LCH, the DSR is not triggered. Alternatively, when the emergency data volume corresponding to the first LCH is less than the second threshold, and data whose remaining time is less than the first threshold exists on the second LCH, the DSR is not triggered.

Manner 3: When the remaining time corresponding to the one or more pieces of data included in the first data on the first LCH changes from being greater than or equal to the first threshold to being less than the first threshold, the data volume corresponding to the first data is greater than or equal to the second threshold, and the priority of the first LCH is higher than the priority of the third LCH, the terminal device triggers the DSR, where data exists on the third LCH, and the third LCH is different from the first LCH.

Correspondingly, when the remaining time corresponding to the first data changes from being greater than or equal to the first threshold to being less than the first threshold, the data volume corresponding to the first data is greater than or equal to the second threshold, and the priority of the first LCH is lower than the priority of the third LCH, the DSR is not triggered. When the remaining time corresponding to the first data changes from being greater than or equal to the first threshold to being less than the first threshold, the data volume corresponding to the first data is less than the second threshold, and the priority of the first LCH is lower than the priority of the third LCH, the DSR is not triggered. When the remaining time corresponding to the first data changes from being greater than or equal to the first threshold to being less than the first threshold, the data volume corresponding to the first data is less than the second threshold, and the priority of the first LCH is higher than the priority of the third LCH, the DSR is not triggered.

Referring to the foregoing condition 4.1, the terminal device maintains an emergency data volume for each LCH or LCG. Step 301 may be implemented in the following manner: When the emergency data volume corresponding to the first LCH is greater than or equal to the second threshold, and the priority of the first LCH is higher than the priority of the third LCH, the DSR is triggered. Correspondingly, when the emergency data volume corresponding to the first LCH is greater than or equal to the second threshold, and the priority of the first LCH is lower than the priority of the third LCH, the DSR is not triggered. When the emergency data volume corresponding to the first LCH is less than the second threshold, and the priority of the first LCH is higher than or lower than the priority of the third LCH, the DSR is not triggered.

Manner 4: When the remaining time corresponding to the one or more pieces of data included in the first data on the first LCH changes from being greater than or equal to the first threshold to being less than the first threshold, the data volume corresponding to the first data is greater than or equal to the second threshold, and the priority of the first LCH is higher than the priority of the fourth LCH, the terminal device triggers the DSR, where data whose remaining time is less than the first threshold exists on the fourth LCH, and the fourth LCH is different from the first LCH.

Correspondingly, when the remaining time corresponding to the one or more pieces of data included in the first data changes from being greater than or equal to the first threshold to being less than the first threshold, the data volume corresponding to the first data is greater than or equal to the second threshold, and the priority of the first LCH is lower than the priority of the fourth LCH, the DSR is not triggered. Alternatively, when the remaining time corresponding to the one or more pieces of data included in the first data changes from being greater than or equal to the first threshold to being less than the first threshold, the data volume corresponding to the first data is less than the second threshold, and the priority of the first LCH is lower than or higher than the priority of the fourth LCH, the DSR is not triggered.

Referring to the foregoing condition 4.1, the terminal device maintains an emergency data volume for each LCH or LCG. Step 301 may be implemented in the following manner: When the emergency data volume corresponding to the first LCH is greater than or equal to the second threshold, and the priority of the first LCH is higher than the priority of the fourth LCH, the DSR is triggered. Correspondingly, when the emergency data volume corresponding to the first LCH is less than the second threshold, and the priority of the first LCH is higher than or lower than the priority of the fourth LCH, the DSR is not triggered. Alternatively, when the emergency data volume corresponding to the first LCH is greater than or equal to the second threshold, and the priority of the first LCH is lower than the priority of the fourth LCH, the DSR is not triggered.

Condition 4.3: The data volume corresponding to the first data is greater than or equal to the second threshold, and any one of the foregoing condition 2.1 to condition 2.5 is met.

Based on the condition 4.3, the first condition includes: the remaining time corresponding to the first data changes from being greater than or equal to the first threshold to being less than the first threshold, the data volume corresponding to the first data is greater than or equal to the second threshold, and any one of the foregoing condition 2.1 to condition 2.5 is met. When the remaining time corresponding to the first data changes from being greater than or equal to the first threshold to being less than the first threshold, the data volume corresponding to the first data is greater than or equal to the second threshold, and the first data meets any one of the foregoing condition 2.1 to condition 2.5, the DSR is triggered. When the remaining time corresponding to the first data changes from being greater than or equal to the first threshold to being less than the first threshold, and the data volume corresponding to the first data is less than the second threshold, and/or the first data does not meet any one of the foregoing condition 2.1 to condition 2.5, the DSR is not triggered.

In some other implementations, the terminal device may maintain an emergency data volume for each LCH or LCG. For a specific implementation of the emergency data volume, refer to related descriptions of the emergency data volume in the foregoing condition 4.1. With reference to the emergency data volume, the first condition may include: the emergency data volume corresponding to the first LCH is greater than or equal to the second threshold, and any one of the foregoing condition 2.1 to condition 2.5 is met.

Condition 4.4: The data volume corresponding to the first data is greater than or equal to the second threshold, and any one of the foregoing condition 3.1 to condition 3.5 is met.

Based on the condition 4.4, the first condition includes: the remaining time corresponding to the first data changes from being greater than or equal to the first threshold to being less than the first threshold, the data volume corresponding to the first data is greater than or equal to the second threshold, and any one of the foregoing condition 3.1 to condition 3.5 is met. Step 301 may be implemented in the following manner: When the remaining time corresponding to the first data changes from being greater than or equal to the first threshold to being less than the first threshold, the data volume corresponding to the first data is greater than or equal to the second threshold, and the first data meets any one of the foregoing condition 3.1 to condition 3.5, the DSR is triggered. Correspondingly, when the remaining time corresponding to the first data changes from being greater than or equal to the first threshold to being less than the first threshold, and the data volume corresponding to the first data is less than the second threshold, and/or the first data does not meet any one of the foregoing condition 3.1 to condition 3.5, the DSR is not triggered.

In some other implementations, the terminal device may maintain an emergency data volume for each LCH or LCG. For a specific implementation of the emergency data volume, refer to related descriptions of the emergency data volume in the foregoing condition 4.1. With reference to the emergency data volume, the first condition may include: the emergency data volume corresponding to the first LCH is greater than or equal to the second threshold, and any one of the foregoing condition 3.1 to condition 3.5 is met. Step 301 may be implemented in the following manner: When the emergency data volume corresponding to the first LCH is greater than or equal to the second threshold, and any one of the foregoing condition 3.1 to condition 3.5 is met, the DSR is triggered. Correspondingly, when the emergency data volume corresponding to the first LCH is greater than or equal to the second threshold, and none of the foregoing condition 3.1 to condition 3.5 is met, the DSR is not triggered. Alternatively, when the emergency data volume corresponding to the first LCH is less than the second threshold, and any one of the foregoing condition 3.1 to condition 3.5 is met, the DSR is not triggered. Alternatively, when the emergency data volume corresponding to the first LCH is less than the second threshold, and none of the foregoing condition 3.1 to condition 3.5 is met, the DSR is not triggered.

In the foregoing implementation 4, an example in which one emergency data volume threshold (that is, the second threshold) is set is used for description. In some other embodiments, when a plurality of remaining time thresholds are set, a plurality of emergency data volume thresholds may also be set correspondingly, and the plurality of emergency data volume thresholds may be the same or may be different. For example, for a large remaining time threshold, a large emergency data volume threshold may be used, to avoid frequent triggering of DSRs. For a small remaining time threshold, a small emergency data volume threshold or even 0 is used, to avoid data timeout caused by not triggering a DSR for long time. Emergency data volumes corresponding to the plurality of thresholds are separately maintained, and a DSR is independently triggered.

In the foregoing possible implementations 1 to 4, the UE needs to monitor remaining time of each piece of data, which imposes a high requirement on storage or processing overheads of the UE. The following provides possible implementations 5 and 6 in which data that has been used for triggering a DSR is recorded, to ensure that these PDUs or PDU sets are no longer used for triggering a DSR. This may reduce a requirement on storage or processing overheads of the UE.

In a possible implementation 5, the terminal device may maintain a flag bit for each piece of data, and a data granularity of maintaining the flag bit may be one data packet, one PDU set, or one data burst. This is not limited herein. The first condition includes: the remaining time corresponding to the first data changes from being greater than or equal to the first threshold to being less than the first threshold, and a flag bit corresponding to the first data is a first value, where the first value indicates that the first data has not been used for triggering a DSR. Step 301 may be implemented in the following manner: When the remaining time corresponding to the first data on the first LCH changes from being greater than or equal to the first threshold to being less than the first threshold, and the flag bit corresponding to the first data is the first value, the DSR is triggered. Then, the terminal device sends the DSR to the network device.

In some embodiments, after the terminal device triggers the delay status report DSR, the terminal device may further update the flag bit corresponding to the first data to a second value, where the second value indicates that the first data has been used for triggering a DSR. In some other embodiments, the terminal device may update the flag bit corresponding to the first data to the second value after sending the DSR. The DSR is not sent immediately after being triggered, and can be sent only when an uplink resource is available. Therefore, the flag bit may be updated to the second value after the DSR is actually sent. After the flag bit corresponding to the first data is the second value, although the remaining time corresponding to the first data is less than the first threshold, a DSR is no longer triggered. In this way, it is ensured that one piece of data is used for triggering a DSR only once.

In some embodiments, the first condition may be modified as follows: The remaining time corresponding to the first data is less than the first threshold, and the flag bit corresponding to the first data is the first value. It should be understood that, in this manner, an achieved effect is consistent with that of the implementation 5, but the terminal device does not need to determine when the remaining time of the first data changes from being greater than or equal to the first threshold to being less than the first threshold.

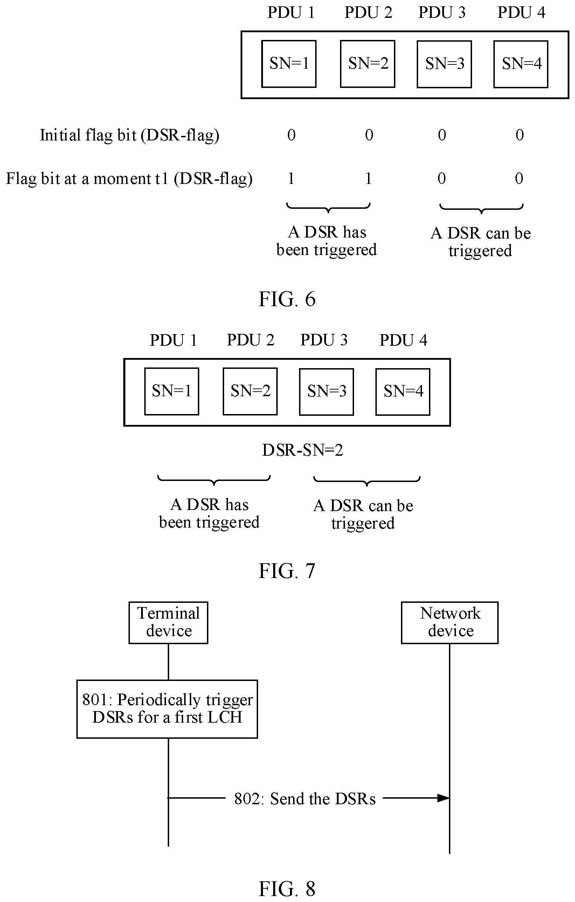

For example, the flag bit is denoted as a DSR-flag, and the first value and the second value may be respectively set to 0 and 1. For example, the first value is set to 0, indicating that the DSR is not triggered; and the second value is set to 1, indicating that the DSR is triggered. That is, the DSR-flag is 0 initially. An example in which a data granularity is one PDU is used. As shown in FIG. 6, initial DSR-flags of a PDU 1, a PDU 2, a PDU 3, and a PDU 4 are 0. When remaining time of the PDU 1 and remaining time of the PDU 2 at a moment t1 are less than the first threshold, and DSR-flags respectively corresponding to the PDU 1 and the PDU 2 are equal to 0, a DSR is triggered. Then, the DSR-flags respectively corresponding to the PDU 1 and the PDU 2 are updated to 1. In this case, only DSR-flags respectively corresponding to the PDU 3 and the PDU 4 are equal to 0. In other words, only the PDU 3 and the PDU 4 can be used for triggering a DSR subsequently, and the PDU 1 and the PDU 2 are no longer used for triggering a DSR.

In some other embodiments, alternatively, the first value may be set to 1, indicating that the DSR is not triggered; and the second value is set to 0, indicating that the DSR is triggered. That is, the DSR-flag is 1 initially. An example in which a data granularity is one PDU is used. When remaining time of a PDU is less than the first threshold, and a DSR-flag corresponding to the PDU is equal to 1, the DSR is triggered. Then, the DSR-flag corresponding to the PDU is set to 0. A PDU whose DSR-flag is 0 is no longer used for triggering a DSR.

In some other embodiments, when a plurality of remaining time thresholds are set, a plurality of DSR-flags may also be correspondingly set. DSR-flags respectively corresponding to the plurality of remaining time thresholds are separately maintained, and a DSR is independently triggered.

In the foregoing implementation 5, the terminal device needs to maintain a status variable for each piece of data. The following provides a manner in which only one variable, that is, a DSR sequence number (DSR-SN), needs to be maintained, where the DSR sequence number indicates a sequence number (sequence number, SN) of last piece of data used for triggering a DSR. Sequence numbers of data that enters the buffer of the terminal device are increased in ascending order of the sequence numbers. Remaining time corresponding to data that first enters the buffer is always less than remaining time corresponding to data that enters the buffer later. Therefore, there is a sequence number. When remaining time corresponding to the sequence number and data before the sequence number is less than the first threshold, the DSR is triggered; and when remaining time corresponding to data after the sequence number is greater than the first threshold, the DSR is not triggered. The DSR sequence number is used to record the sequence number, that is, the DSR sequence number may be a largest sequence number corresponding to data that has been used for triggering a DSR.

In a possible implementation 6, the first condition includes: the remaining time corresponding to the first data changes from being greater than or equal to the first threshold to being less than the first threshold, and a sequence number corresponding to the first data is greater than the DSR sequence number. Step 301 may be implemented in the following manner: When the remaining time corresponding to the first data on the first LCH changes from being greater than or equal to the first threshold to being less than the first threshold, and the sequence number corresponding to the first data is greater than the DSR sequence number, the DSR is triggered. Then, the terminal device sends the DSR to the network device.

In some embodiments, after the terminal device triggers the delay status report DSR, the terminal device may further update the DSR sequence number to the sequence number corresponding to the first data. In some other embodiments, the terminal device may update the DSR sequence number corresponding to the first data after sending the DSR, and may update the DSR sequence number to a largest sequence number of data (for example, a PDU or a PDU set) included in a volume of data whose remaining time is less than the threshold in the DSR MAC CE.

In some other embodiments, the terminal device may also assign a value to the DSR sequence number by adding 1 to the sequence number of the last piece of data used for triggering a DSR. In this case, the DSR-SN indicates a sequence number of next piece of data that can be used for triggering a DSR.

Correspondingly, when the remaining time corresponding to the first data on the first LCH changes from being greater than or equal to the first threshold to being less than the first threshold, and the sequence number corresponding to the first data is less than the DSR sequence number, the DSR is not triggered.

In some embodiments, the first condition may be modified as follows: The remaining time corresponding to the first data is less than the first threshold, and the corresponding sequence number is greater than the DSR sequence number. It should be understood that, in this manner, an achieved effect is consistent with that of the implementation 6, but the terminal device does not need to determine when the remaining time of the first data changes from being greater than or equal to the first threshold to being less than the first threshold.

For example, a data granularity is one PDU. As shown in FIG. 7, sequence numbers corresponding to a PDU 1, a PDU 2, a PDU 3, and a PDU 4 are respectively 1, 2, 3, and 4. When a DSR sequence number at a moment t1 is 2, it indicates that the PDU 1 and the PDU 2 have been used for triggering a DSR, and a data packet corresponding to a largest sequence number in data packets that have been used for triggering the DSR is the PDU 2. Then, only the PDU 3 and the PDU 4 whose sequence numbers are greater than the DSR sequence number can be used for triggering a DSR, and the PDU 1 and the PDU 2 are no longer used for triggering a DSR.

In some other embodiments, when a plurality of remaining time thresholds are set, a plurality of DSR-SNs may also be correspondingly set. DSR-SNs respectively corresponding to the plurality of remaining time thresholds are separately maintained, and the DSR is independently triggered.

In the foregoing possible implementation 6, the terminal device does not need to pay attention to remaining time of all data at any time, and it can also be ensured that each piece of data is used for triggering a DSR only once, so that a large quantity of repeated DSRs generated when the data meets a remaining time threshold requirement for long time can be avoided, thereby reducing consumption of uplink resources.

An embodiment of this application further provides another buffer status reporting method. On a terminal device side, the method may be performed by a terminal device or a component (for example, a chip or a circuit) used in the terminal device. On a network side, the method may be performed by a network device or a component (for example, a chip or a circuit) used in the network device. For ease of description, an example in which the method is performed by the terminal device and the network device is used below for description.

As shown in FIG. 8, the buffer status reporting method provided in this embodiment of this application may include the following steps.

Step 801: The terminal device periodically triggers DSRs for a first LCH.

In a possible implementation, for an LCH or an LCG, each time after the DSR is triggered, the terminal device may start a periodic timer, where timing duration of the periodic timer is equal to a periodicity. When the periodic timer expires, the DSR is triggered. A value of the periodicity may be an arrival periodicity of uplink data on the LCH or the LCG. The periodicity may be determined by the terminal device, or may be configured by the network device for the terminal device.

When the periodicity is configured by the network device for the terminal device, the terminal device may further receive first configuration information sent by the network device, where the first configuration information indicates a DSR triggering periodicity corresponding to the first LCH.

In a possible implementation, after the terminal device receives the first configuration information, the terminal device determines an occasion on which a DSR is triggered for a first time, and then periodically triggers the DSRs based on the periodicity indicated in the first configuration information.

In another possible implementation, after the terminal device receives the first configuration information, the terminal device triggers a first DSR based on any one of the foregoing implementations 1 to 6, and then periodically triggers the DSRs based on the periodicity indicated in the first configuration information.

In still another possible implementation, the first configuration information further indicates an occasion on which the terminal device triggers a DSR for a first time. In other words, the terminal device may trigger a first DSR based on the occasion on which the DSR is triggered for the first time indicated in the first configuration information, and then periodically trigger the DSRs based on the periodicity indicated in the first configuration information.

For example, for an LCH or an LCG, the network device may configure a start offset (offset) and a periodicity for the terminal device by using a radio resource control (radio resource control, RRC) message, where the start offset indicates an occasion on which the LCH or the LCG is used for triggering a DSR for a first time. A form of the start offset may be a quantity of system frames, a quantity of subframes, a quantity of slots, or a quantity of symbols that are offset backward by using a system frame number (system frame number, SFN) #0 as a reference point.

In still another possible implementation, the terminal device further receives downlink control information (downlink control information, DCI), where the DCI indicates an occasion on which the terminal device triggers a DSR for a first time. The terminal device may trigger a first DSR based on the occasion on which the DSR is triggered for the first time indicated in the DCI, and then periodically trigger the DSRs based on the periodicity indicated in the first configuration information.

For example, for an LCH or an LCG, a network may first configure a periodicity by using an RRC message, but does not indicate a start location of the DSR. Then, the network delivers a piece of DCI. After receiving the DCI, the UE immediately triggers a DSR once, and then triggers a subsequent DSR based on a periodicity configuration.

Step 802: The terminal device periodically sends the DSRs to the network device.

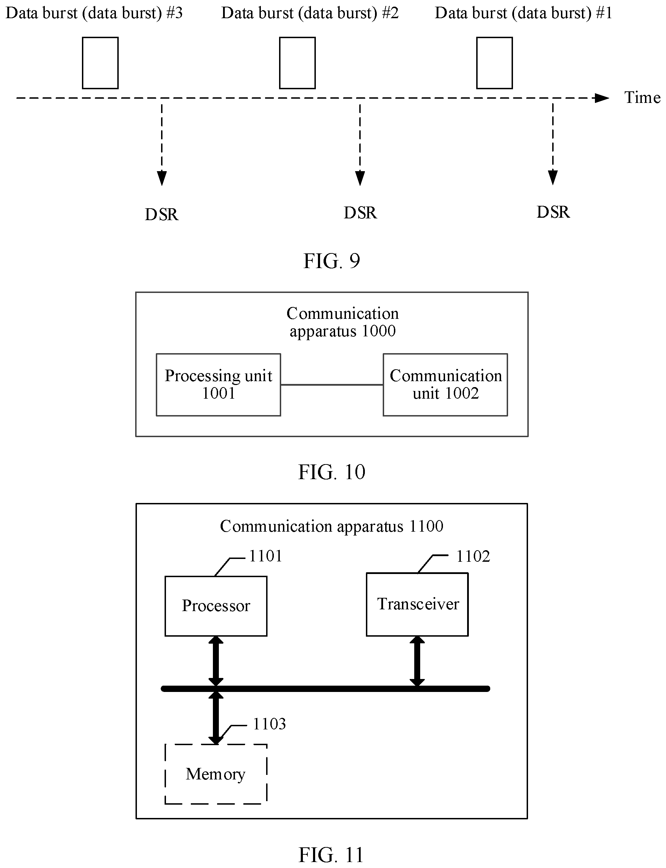

The embodiment shown in FIG. 8 may be applied to a periodic service scenario, for example, an XR service scenario. Because XR data generally arrives at a buffer of the terminal device periodically, and all data in each periodicity arrives at the UE buffer in short time, this is referred to as a data burst. Remaining time corresponding to data in a data burst is always close. In a manner of periodically triggering DSRs, as shown in FIG. 9, a DSR may be periodically triggered once for each data burst, so that unnecessary DSR triggering and sending can be avoided, thereby saving network resources.

It may be understood that to implement functions in the foregoing embodiments, a base station and a terminal include corresponding hardware structures and/or software modules for performing the functions. A person skilled in the art should be easily aware that the units and the steps of the method in the examples described with reference to embodiments disclosed in this application may be implemented in a form of hardware or a combination of hardware and computer software in this application. Whether a function is performed by hardware or hardware driven by computer software depends on particular application scenarios and design constraint conditions of the technical solutions.

The following are diagrams of possible structures of communication apparatuses according to embodiments of this application. The communication apparatuses may be configured to implement functions of the terminal device or the network device in the foregoing method embodiments. Therefore, beneficial effects of the foregoing method embodiments can also be achieved.

As shown in FIG. 10, a communication apparatus 1000 includes a processing unit 1001 and a communication unit 1002. The communication apparatus 1000 is configured to implement functions of the terminal device/network device in the method embodiment shown in FIG. 3 or FIG. 8.

When the communication apparatus 1000 is configured to implement the functions of the terminal device in the method embodiment shown in FIG. 3, the processing unit 1001 is configured to perform step 301 and step 303, and the communication unit 1002 is configured to perform step 302.

When the communication apparatus 1000 is configured to implement the functions of the terminal device in the method embodiment shown in FIG. 8, the processing unit 1001 is configured to perform step 801, and the communication unit 1002 is configured to perform step 802.

For more detailed descriptions of the processing unit 1001 and the communication unit 1002, directly refer to related descriptions in the method embodiment shown in FIG. 3 or FIG. 8. Details are not described herein.

It should be understood that division of the units in the foregoing apparatus is merely logical function division. During actual implementation, all or a part of the units may be integrated into one physical entity, or may be physically separated. In addition, all the units in the apparatus may be implemented in a form of software invoked by a processing element, or may be implemented in a form of hardware; or a part of the units may be implemented in a form of software invoked by a processing element, and a part of the units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or a part of these units may be integrated, or may be implemented independently. The processing element herein may also be referred to as a processor, and may be an integrated circuit having a signal processing capability. In an implementation process, operations in the foregoing methods or the foregoing units may be implemented by using a hardware integrated logic circuit in the processor element or may be implemented in a form in which the processing element invokes software.

In an example, a unit in any one of the foregoing apparatuses may be one or more integrated circuits configured to implement the foregoing methods, for example, one or more application-specific integrated circuits (application-specific integrated circuit, ASIC), one or more microprocessors (digital signal processor, DSP), one or more field programmable gate arrays (field programmable gate array, FPGA), or a combination of at least two of these forms of integrated circuits. For another example, when the units in the apparatus may be implemented in a form in which a processing element schedules a program, the processing element may be a processor, for example, a general-purpose central processing unit (central processing unit, CPU) or another processor that can invoke the program. For another example, these units may be integrated together, and implemented in a form of a system-on-a-chip (system-on-a-chip, SoC).

The foregoing unit configured for receiving is an interface circuit of the apparatus, and is configured to receive a signal from another apparatus. For example, when the apparatus is implemented in a manner of a chip, the receiving unit is an interface circuit that is of the chip and that is configured to receive a signal from another chip or apparatus. The foregoing unit configured for sending is an interface circuit of the apparatus, and is configured to send a signal to another apparatus. For example, when the apparatus is implemented in the manner of the chip, the sending unit is an interface circuit that is of the chip and that is configured to send a signal to another chip or apparatus.

In another possible product form, the terminal device or the network device in embodiments of this application may be implemented by using a general bus architecture. For ease of description, FIG. 11 is a diagram of a structure of a communication apparatus 1100 according to an embodiment of this application. The communication apparatus 1100 includes a processor 1101 and a transceiver 1102. The communication apparatus 1100 may be a terminal device, or a chip or chip system in the terminal device. Alternatively, the communication apparatus 1100 may be a network device, or a chip or module in the network device. FIG. 11 shows only main components of the communication apparatus 1100. In addition to the processor 1101 and the transceiver 1102, the communication apparatus 1100 may further include a memory 1103 and an input/output apparatus (not shown in the figure).

Optionally, the processor 1101 is mainly configured to: process a communication protocol and communication data, control the entire communication apparatus, execute a software program, and process data of the software program. The memory 1103 is mainly configured to store the software program and data. The transceiver 1102 may include a radio frequency circuit and an antenna. The radio frequency circuit is mainly configured to perform conversion between a baseband signal and a radio frequency signal and process the radio frequency signal. The antenna is mainly configured to receive and send a radio frequency signal in a form of an electromagnetic wave. The input/output apparatus, for example, a touchscreen, a display, or a keyboard, is mainly configured to: receive data input by a user and output data to the user.

Optionally, the processor 1101, the transceiver 1102, and the memory 1103 may be connected through a communication bus.

After the communication apparatus is powered on, the processor 1101 may read the software program in the memory 1103, interpret and execute instructions of the software program, and process the data of the software program. When data needs to be sent in a wireless manner, the processor 1101 performs baseband processing on the to-be-sent data, and then outputs a baseband signal to the radio frequency circuit. The radio frequency circuit performs radio frequency processing on the baseband signal, and then sends a radio frequency signal to the outside in a form of an electromagnetic wave through the antenna. When data is sent to the communication apparatus, the radio frequency circuit receives a radio frequency signal through the antenna, converts the radio frequency signal into a baseband signal, and outputs the baseband signal to the processor 1101. The processor 1101 converts the baseband signal into data, and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

In some embodiments, in terms of hardware implementation, a person skilled in the art may figure out that the communication apparatus may be in a form of the communication apparatus 1100 shown in FIG. 11.

In an example, a function/implementation process of the processing unit 1001 in FIG. 10 may be implemented, by invoking computer-executable instructions stored in the memory 1103, by using the processor 1101 in the communication apparatus 1100 shown in FIG. 11. A function/implementation process of the communication unit 1002 in FIG. 10 may be implemented by using the transceiver 1102 in the communication apparatus 1100 shown in FIG. 11.

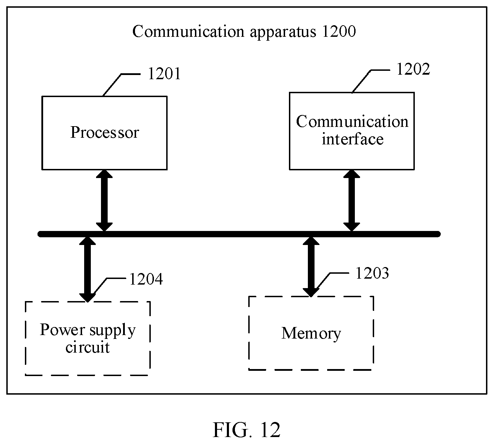

In still another possible product form, the terminal device or the network device in this application may use a composition structure shown in FIG. 12, or include components shown in FIG. 12. FIG. 12 is a diagram of composition of a communication apparatus 1200 according to this application.

As shown in FIG. 12, the communication apparatus 1200 includes at least one processor 1201. Optionally, the communication apparatus further includes a communication interface 1202.

When related program instructions are executed in the at least one processor 1201, the apparatus 1200 may be enabled to implement the method provided in any one of the foregoing embodiments and any possible design thereof. Alternatively, the processor 1201 is configured to implement, by using a logic circuit or by executing code instructions, the method provided in any one of the foregoing embodiments and any possible design thereof.

The communication interface 1202 may be configured to receive the program instructions and transmit the program instructions to the processor. Alternatively, the communication interface 1202 may be configured to perform communication interaction between the communication apparatus 1200 and another communication device, for example, exchange control signaling and/or service data. For example, the communication interface 1202 may be configured to receive a signal from an apparatus other than the communication apparatus 1200, and transmit the signal to the processor 1201, or send a signal from the processor 1201 to a communication apparatus other than the communication apparatus 1200.

Optionally, the communication interface 1202 may be a code and/or data read/write interface circuit, or the communication interface 1202 may be a signal transmission interface circuit between a communication processor and a transceiver, or may be a pin of a chip.

Optionally, the communication apparatus 1200 may further include at least one memory 1203, and the memory 1203 may be configured to store the related program instructions and/or data that are/is required. It should be noted that the memory 1203 may exist independently of the processor 1201, or may be integrated with the processor 1201. The memory 1203 may be located in the communication apparatus 1200, or may be located outside the communication apparatus 1200. This is not limited.

Optionally, the communication apparatus 1200 may further include a power supply circuit 1204, and the power supply circuit 1204 may be configured to supply power to the processor 1201. The power supply circuit 1204 may be located in a same chip as the processor 1201, or may be located in a chip other than a chip in which the processor 1201 is located.

Optionally, the communication apparatus 1200 may further include a bus, and parts of the communication apparatus 1200 may be interconnected through the bus.

In some embodiments, in terms of hardware implementation, a person skilled in the art may figure out that the communication apparatus 1000 shown in FIG. 10 may be in a form of the communication apparatus 1200 shown in FIG. 12.

In an example, a function/implementation process of the processing unit 1001 in FIG. 10 may be implemented, by invoking computer-executable instructions stored in the memory 1203, by using the processor 1201 in the communication apparatus 1200 shown in FIG. 12. A function/implementation process of the communication unit 1002 in FIG. 10 may be implemented through the communication interface 1202 in the communication apparatus 1200 shown in FIG. 12.

It should be noted that the structure shown in FIG. 12 does not constitute a specific limitation on the terminal device or the network device. For example, in some other embodiments of this application, the terminal device or the network device may include more or fewer components than those shown in the figure, or combine some components, or split some components, or have different component arrangements. The components shown in the figure may be implemented by hardware, software, or a combination of software and hardware.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk drive, a CD-ROM, or any other form of storage medium well-known in the art. For example, a storage medium is coupled to the processor, so that the processor can read information from the storage medium and write information into the storage medium. Certainly, the storage medium may alternatively be a component of the processor. The processor and the storage medium may be located in an ASIC. In addition, the ASIC may be located in a base station or a terminal. Certainly, the processor and the storage medium may alternatively exist in a base station or terminal as discrete components.

It may be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor, or may be any conventional processor.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk drive, a CD-ROM, or any other form of storage medium well-known in the art. For example, a storage medium is coupled to the processor, so that the processor can read information from the storage medium and write information into the storage medium. Certainly, the storage medium may alternatively be a component of the processor. The processor and the storage medium may be located in an ASIC. In addition, the ASIC may be located in a base station or a terminal. Certainly, the processor and the storage medium may alternatively exist in a base station or terminal as discrete components.

All or a part of the foregoing embodiments may be implemented by using software, hardware, firmware, or any combination thereof. When the software is used to implement embodiments, all or a part of embodiments may be implemented in a form of a computer program product. The computer program product includes one or more computer programs or instructions. When the computer program or the instructions are loaded and executed on a computer, all or a part of procedures or functions in embodiments of this application are performed. The computer may be a general-purpose computer, a dedicated computer, a computer network, a network device, user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium accessible by the computer, or a data storage device, like a server or a data center, integrating one or more usable media. The usable medium may be a magnetic medium, for example, a floppy disk, a hard disk drive, or a magnetic tape; may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product implemented on one or more computer-usable storage media (including but not limited to a magnetic disk memory, an optical memory, and the like) including computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more procedures in the flowcharts and/or in one or more blocks in the block diagrams.

These computer program instructions may be stored in a computer-readable memory that can indicate the computer or any other programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A buffer status reporting method, comprising:
triggering a delay status report DSR when first data on a first logical channel LCH meets a first condition, wherein the first condition comprises: remaining time corresponding to the first data changes from being greater than or equal to a first threshold to being less than the first threshold; and
sending the DSR to a network device.

2. The method according to claim 1, wherein the first condition further comprises:
a data volume corresponding to the first data is greater than or equal to a second threshold.

3. The method according to claim 1, wherein the first data does not comprise data that has been used for triggering a DSR.

4. The method according to claim 2 or 3, wherein the second threshold is preset or indicated by the network device to the terminal device.

5. The method according to claim 1, wherein after the sending the DSR to the network device, the method further comprises:
skipping triggering a DSR when remaining time of second data comprised in the first data on the first LCH is less than the first threshold.

6. The method according to any one of claims 1 to 5, wherein the first condition further comprises any one of the following:
no data exists on the second LCH, and the second LCH is different from the first LCH;
no data whose remaining time is less than the first threshold exists on the second LCH;
a priority of the first LCH is higher than a priority of a third LCH, data exists on the third LCH, and the third LCH is different from the first LCH; and
the priority of the first LCH is higher than a priority of a fourth LCH, data whose remaining time is less than the first threshold exists on the fourth LCH, and the fourth LCH is different from the first LCH.

7. The method according to any one of claims 1 to 5, wherein the first condition further comprises any one of the following:
the first data corresponds to high importance;
the first data corresponds to the high importance, no data exists on a second LCH, and the second LCH is different from the first LCH;
the first data corresponds to the high importance, and no data whose remaining time is less than the first threshold exists on the second LCH;
the first data corresponds to the high importance, a priority of the first LCH is higher than a priority of a third LCH, data exists on the third LCH, and the third LCH is different from the first LCH; and
the first data corresponds to the high importance, the priority of the first LCH is higher than a priority of a fourth LCH, data whose remaining time is less than the first threshold exists on the fourth LCH, and the fourth LCH is different from the first LCH.

8. The method according to any one of claims 1 to 5, wherein the first condition comprises any one of the following:
the first data corresponds to high importance, no data of high importance exists on a second LCH, and the second LCH is different from the first LCH;
the first data corresponds to the high importance, and no data that is of high importance and whose remaining time is less than the first threshold exists on the second LCH;
the first data corresponds to the high importance, a priority of the first LCH is higher than a priority of a fifth LCH, data of high importance exists on the fifth LCH, and the fifth LCH is different from the first LCH; and
the first data corresponds to the high importance, the priority of the first LCH is higher than a priority of a sixth LCH, data that is of high importance and whose remaining time is less than the first threshold exists on the sixth LCH, and the sixth LCH is different from the first LCH.

9. The method according to claim 1, wherein the first condition further comprises:
a flag bit corresponding to the first data is a first value, wherein the first value indicates that the first data has not been used for triggering a DSR.

10. The method according to claim 9, wherein after triggering, by the terminal device, the delay status report DSR, the method further comprises:
updating the flag bit corresponding to the first data to a second value, wherein the second value indicates that the first data has been used for triggering a DSR.

11. The method according to claim 1, wherein the first condition further comprises:
a sequence number corresponding to the first data is greater than a DSR sequence number, wherein the DSR sequence number is a largest sequence number corresponding to data that has been used for triggering a DSR.

12. The method according to claim 11, wherein after triggering, by the terminal device, the delay status report DSR, the method further comprises:
updating the DSR sequence number to the sequence number corresponding to the first data.

13. A buffer status reporting method, comprising:
periodically triggering delay status reports DSRs for a first logical channel LCH; and
periodically sending the DSRs to a network device.

14. The method according to claim 13, wherein the method further comprises:
receiving first configuration information sent by the network device, wherein the first configuration information indicates a DSR triggering periodicity corresponding to the first LCH.

15. The method according to claim 14, wherein the method further comprises:
the first configuration information further indicates an occasion on which the terminal device triggers a DSR for a first time.

16. The method according to claim 14, wherein the method further comprises:
receiving downlink control information DCI, wherein the DCI indicates an occasion on which the terminal device triggers a DSR for a first time.

17. A communication apparatus, comprising a processor, an interface circuit, and a memory, wherein
the processor is configured to execute a computer program or instructions stored in the memory, to enable the communication apparatus to implement the method according to any one of claims 1 to 12, or enable the communication apparatus to implement the method according to any one of claims 13 to 16.

18. A communication apparatus, comprising a processor and a memory, wherein
the processor is configured to execute a computer program or instructions stored in the memory, to enable the communication apparatus to implement the method according to any one of claims 1 to 12, or enable the communication apparatus to implement the method according to any one of claims 13 to 16.

19. A computer-readable storage medium, configured to store a computer program or instructions, wherein when the computer program or the instructions are executed by a computer, the computer is enabled to implement the method according to any one of claims 1 to 12, or the computer is enabled to implement the method according to any one of claims 13 to 16.

20. A chip, comprising a processor, wherein the processor is coupled to a memory, and is configured to execute a computer program or instructions stored in the memory, to enable the chip to implement the method according to any one of claims 1 to 12, or enable the chip to implement the method according to any one of claims 13 to 16.

21. A computer program product, wherein the computer program product stores a computer program, and the computer program comprises program instructions; and when the program instructions are executed by a computer, the computer is enabled to perform the method according to any one of claims 1 to 12, or the computer is enabled to perform the method according to any one of claims 13 to 16.
